(19) Europäisches Patentamt
European Patent Office
Office européen des brevets

(11) **EP 4 003 761 B1**

(12) **FASCICULE DE BREVET EUROPEEN**

(45) Date de publication et mention de la délivrance du brevet:
**05.07.2023 Bulletin 2023/27**

(21) Numéro de dépôt: **20757643.0**

(22) Date de dépôt: **27.07.2020**

(51) Classification Internationale des Brevets (IPC):
$B60C\ 11/03^{(2006.01)}$ $\quad B60C\ 11/12^{(2006.01)}$
$B60C\ 1/00^{(2006.01)}$ $\quad C08C\ 19/25^{(2006.01)}$
$C08L\ 19/00^{(2006.01)}$ $\quad C08L\ 15/00^{(2006.01)}$
$C08L\ 57/02^{(2006.01)}$ $\quad C08L\ 91/00^{(2006.01)}$
$C08K\ 3/36^{(2006.01)}$ $\quad B60C\ 11/00^{(2006.01)}$

(52) Classification Coopérative des Brevets (CPC):
**B60C 11/0302; B60C 1/0016; B60C 11/0318; B60C 11/12; C08K 3/36; C08L 15/00; C08L 57/02; C08L 91/00;** B60C 2011/0016; B60C 2011/0025; B60C 2011/0313; B60C 2011/0374; B60C 2011/129; B60C 2011/1295

(86) Numéro de dépôt international:
**PCT/FR2020/051372**

(87) Numéro de publication internationale:
**WO 2021/019174 (04.02.2021 Gazette 2021/05)**

(54) **PNEUMATIQUE COMPORTANT UNE BANDE DE ROULEMENT**

REIFEN MIT LAUFFLÄCHE

TYRE COMPRISING A TREAD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.07.2019 FR 1908517**

(43) Date de publication de la demande:
**01.06.2022 Bulletin 2022/22**

(73) Titulaire: **COMPAGNIE GENERALE DES ETABLISSEMENTS MICHELIN**
**63000 Clermont-Ferrand (FR)**

(72) Inventeurs:
• **BOISDON, Bertrand**
**63040 CLERMONT-FERRAND Cedex 9 (FR)**

• **VANTAL, Marie-Hélène**
**63040 CLERMONT-FERRAND Cedex 9 (FR)**

(74) Mandataire: **Le Cam, Stéphane Georges Elie Manufacture Française des Pneumatiques Michelin**
**DCJ/PI - F35 - Ladoux**
**23, place des Carmes-Déchaux**
**63040 Clermont-Ferrand Cedex 9 (FR)**

(56) Documents cités:
EP-A1- 2 463 123      EP-A1- 2 965 925
WO-A1-2017/092896     DE-A1-102017 203 225
JP-A- 2015 051 753

**Description**

**Domaine technique**

La présente invention concerne un pneumatique pour véhicule automobile dont la bande de roulement comprend une pluralité de rainures obliques présentant un fort élancement. L'invention est plus particulièrement adaptée pour un pneumatique destiné à équiper un véhicule de tourisme ou une camionnette.

**Technique antérieure**

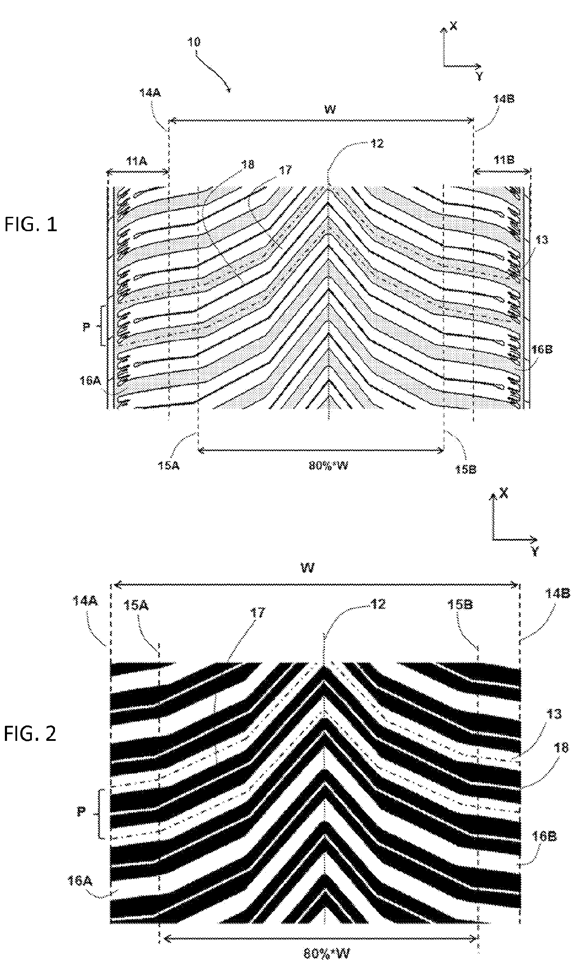

De manière connue, un pneumatique destiné à équiper un véhicule automobile comporte une bande de roulement. Cette bande de roulement comprend une surface de roulement et deux bords délimitant ladite surface de roulement. La surface de roulement correspond à l'ensemble des points de la bande de roulement qui entrent en contact avec une chaussée lorsque le pneumatique, gonflé à sa pression de référence et écrasé par une charge de référence, roule sur cette chaussée. La pression de gonflage de référence et la charge de référence sont définies dans les conditions d'utilisation du pneumatique, conditions précisées notamment par la norme E.T.R.T.O.. La surface de roulement de la bande de roulement comprend des creux formés par diverses rainures, telles que des rainures obliques. Les rainures obliques constituent des canaux destinés à évacuer l'eau sur les côtés de la bande de roulement. Il est connu du document GB2240522 une bande de roulement directionnelle comprenant une pluralité de rainures obliques. La bande de roulement comprend un axe central X et deux bords qui encadrent ladite bande de roulement et qui déterminent une largeur de bande de roulement, notée A sur la figure 1. La bande de roulement présente également une partie centrale de largeur notée K et qui correspond à environ 80% de la largeur A de la bande de roulement. Dans cette partie centrale, chaque rainure oblique présente un grand élancement, c'est-à-dire que la projection selon la direction circonférentielle X de la dite rainure est très proche voire supérieure à la moitié de la largeur K de cette partie centrale. Le très grand élancement des rainures obliques permet d'améliorer l'évacuation de l'eau hors de la bande de roulement et permet donc d'améliorer l'adhérence sur un sol mouillé. Cependant, les blocs de matière qui sont délimités par ces rainures obliques peuvent présenter un plus grand niveau d'usure du fait d'une moins bonne rigidité transversale. En outre, le comportement sur sol sec est également pénalisé par le grand élancement des rainures obliques. Enfin sur un sol enneigé, ce type de pneumatique présente une adhérence limitée. Par ailleurs, le document DE 10 2017 203225 A1 divulgue un pneumatique avec une bande de roulement directionnelle comprenant des motifs, ayant un pas déterminé, qui se succèdent selon la direction circonférentielle et qui délimitent une pluralité des rainures obliques.
En outre, il existe une demande de plus en plus importante pour des pneumatiques dits « quatre saisons » présentant un excellent compromis d'adhérence sur sol enneigé/sol mouillé tout en préservant les performances sur sol sec. Ces pneumatiques quatre saisons ont pour objectif de rouler en sécurité toute l'année quelle que soit la météo. Ces pneumatiques ont généralement reçu la certification hiver 3PMSF (pour 3 Peak Mountain Snow Flake). Cette certification est notamment indiquée sur l'un ou les deux flancs desdits pneumatiques.
Il existe donc un besoin d'obtenir un pneumatique quatre saisons présentant des performances d'adhérence sur sol sec et sur sol mouillé qui soient proches d'un pneumatique été tout en assurant une très grande sécurité sur un sol enneigé et une résistance à l'usure améliorée.

**Exposé de l'invention**

La présente invention vise à remédier à cet inconvénient.
Plus particulièrement, la présente invention vise à améliorer le compromis d'adhérence sur sol enneigé/sol mouillé pour un pneumatique quatre saisons tout en améliorant les performances en usure d'un tel pneumatique.
L'invention concerne un pneumatique comportant une bande de roulement directionnelle.
Par « pneumatique », on entend tous les types de bandage en matériau caoutchoutique soumis en roulage à une pression interne ou non soumis à une telle pression interne en roulage (c'est le cas d'un bandage sans air comprimé, par exemple, de type Tweel™).
Par « matériau caoutchoutique », on entend un élastomère diénique, c'est-à-dire de manière connue un élastomère issu d'au moins en partie (c'est-à-dire homopolymère ou copolymère) de monomères diènes (monomères porteurs de doubles liaisons carbone-carbone, conjuguées ou non).
Par « bande de roulement » d'un pneumatique, on entend une quantité de matériau caoutchoutique délimitée par une surface de roulement. La surface de roulement regroupe l'ensemble des points du pneumatique qui vont entrer en contact avec un sol dans des conditions usuelles de roulage. Pour un pneumatique, les « conditions usuelles » de roulage sont les conditions d'utilisation définies par la norme ETRTO (European Tyre and Rim Technical Organisation). Ces conditions d'utilisation précisent la pression de gonflage de référence correspondant à la capacité de charge du pneu indiquée par son indice de charge et son code vitesse. Ces conditions d'utilisation peuvent aussi être dites « conditions nominales » ou « conditions d'usage ».

Par « bande de roulement directionnelle », on entend une bande de roulement dont les éléments de sculpture sont spécifiquement agencés pour optimiser les caractéristiques comportementales en fonction d'un sens de rotation prédéterminé. Ce sens de rotation est classiquement indiqué par une flèche sur le flanc du pneumatique.

La bande de roulement de l'invention comprend un axe central et deux bords encadrant ledit axe central et déterminant une largeur de bande de roulement W, la largeur de la bande de roulement étant supérieure ou égale à 140 mm. Cette largeur de bande de roulement est déterminée à partir d'une empreinte réalisée de manière dynamique. Afin d'obtenir une telle empreinte, on dépose de l'encre noire sur une partie de la bande de roulement du pneumatique et on vient faire rouler cette partie encrée sur une feuille de papier selon une certaine vitesse d'avancement. Les conditions de réalisation d'une telle empreinte se font à la pression nominale, pour une charge correspondant à 0,76 fois la charge nominale et à une vitesse d'avancement de 100 mm/s. Par exemple pour un pneumatique de dimension 205/55R16 91V, les conditions de réalisation de l'empreinte se feront à une pression de 2,5 bar et pour une charge de 480 daN. L'ensemble des mesures pour la détermination de l'élancement E, de la densité d'incisions SD, de la densité moyenne d'incisions SDmoy se font par la suite à partir d'une empreinte de la bande de roulement roulant sur un support aux conditions de charge, de pression et de vitesse d'avancement telles que décrites ci-dessus.

La bande de roulement comprend une pluralité de motifs qui se succèdent selon la direction circonférentielle, chaque motif ayant un pas P.

« Par motif », on entend un ensemble de bloc qui est répété selon la direction circonférentielle. Cette répétition peut se faire à iso-dimension. La bande de roulement est dite alors monopas. En variante, cette répétition peut se faire avec des dimensions différentes, notamment des valeurs de pas différentes. La bande de roulement est dite alors multipas. Avantageusement, le nombre de valeurs de pas différent pour une bande de roulement multipas est compris entre 3 et 5 pas. De manière préférentielle, l'ensemble de bloc du motif s'étend sur toute la largeur W de bande de roulement. Chaque ensemble de bloc comprend au moins un bloc. « Par bloc », on entend un élément en relief délimité par des rainures et comprenant des parois latérales et une face de contact, cette dernière étant destinée à venir en contact avec un sol pendant le roulage.

« Par direction circonférentielle », on entend une direction qui est tangente à tout cercle centré sur l'axe de rotation. Cette direction est perpendiculaire à la fois à une direction axiale et à une direction radiale.

« Par direction axiale », on entend une direction parallèle à l'axe de rotation du pneumatique.

« Par direction radiale », on entend une direction qui est perpendiculaire à l'axe de rotation du pneumatique (cette direction correspond à la direction de l'épaisseur de la bande de roulement au centre de ladite bande de roulement).

« Par rainure », on entend une découpure dont la distance entre les parois de matière est supérieure à 2 mm.

« Par rainure oblique », on entend une rainure dont l'orientation principale fait un angle aigu compris entre 20° et 70° avec la direction axiale.

« Par rainure circonférentielle », on entend une rainure dont l'orientation principale est selon la direction circonférentielle.

« Par incision », on entend une découpure dont la distance entre les parois de matière est inférieure ou égale à 2 mm. Il est également déterminé que la profondeur d'une incision dans la bande de roulement est supérieure ou égale à 1 mm. Dès lors, des découpures esthétiques, de type « grain d'orge », dont la profondeur est inférieure à 1 mm dans la bande de roulement ne sont pas considérés comme des incisions.

Les motifs délimitent une pluralité de rainures obliques, chaque rainure oblique s'étendant d'un des bords de la bande de roulement vers l'axe central.

Dans une partie centrale de la bande de roulement centrée sur l'axe central et de largeur correspondant à 80% de la largeur W de ladite bande de roulement, tout ou partie des rainures obliques de la pluralité de rainures obliques a un élancement compris entre 0,85 et 1,5 et de préférence entre 0,87 et 1,1. Avec une telle valeur d'élancement dans la partie centrale de la bande de roulement, on s'assure d'une meilleure évacuation de l'eau hors de la bande de roulement et on limite en conséquence les risques d'hydroplanage.

« Par élancement » E, on entend le rapport entre une longueur projetée Lpx de la rainure oblique selon la direction circonférentielle avec la moitié de la largeur W de la largeur de la partie centrale de la bande de roulement, tel que

$$E = \frac{Lpx}{0,4*W}$$

que                                    .

Chaque motif comprend au moins une incision. Une densité d'incision SD dans le motif est comprise entre 10 $mm^{-1}$ et 70 $mm^{-1}$.

Par « densité d'incision SD » on entend le rapport entre la somme de la/les longueur(s) projetée(s) lpyi de la/desdites incision(s) selon une direction axiale sur le produit du pas P du motif et de la largeur W de la bande de

$$SD = \frac{\sum_{i=1}^{n} lpyi}{P*W} * 1000$$

roulement tel que , avec n le nombre d'incisions dans le motif.

Les caractéristiques de la bande de roulement ainsi énoncées permettent d'obtenir une pneumatique de type quatre saisons présentant un excellent compromis d'adhérence sur sol enneigé/sol mouillé tout en améliorant les performances en usure de ce pneumatique.

Dans un mode de réalisation préférentiel, la bande de roulement comprend différent types de motifs Mj, avec j supérieur ou égal à 2, les motifs appartenant à un même type de motif ayant un même pas, le pas entre des motifs appartenant à deux types de motifs différents étant différent, et en ce que la densité moyenne d'incision (SDmoy) est comprise entre 10 mm$^{-1}$ et 70 mm$^{-1}$, ladite densité moyenne d'incisions (SDmoy) correspondant à la moyenne des densités d'incisions SDj des motifs des différents types de motifs Mj sur toute la circonférence de la bande de roulement, ladite densité moyenne d'incisions SDmoy étant pondérée en fonction du nombre de motifs Nj par type de motif Mj et du pas Pj des motifs appartenant au type de motif Mj sur ladite circonférence de la bande de roulement, tel que

$$SDmoy = \frac{\sum_{j=1}^{m} (SDj*Nj*Pj)}{\sum_{j=1}^{m} (Nj*Pj)}$$

avec SDj la densité d'incisions dans un motif appartenant au type de motif Mj, Pj le pas des motifs appartenant au type de motif Mj, Nj le nombre de motifs appartenant au type de motif Mj.

Préférentiellement, la densité d'incision SD ou la densité moyenne d'incision SDmoy est supérieure à 25 mm$^{-1}$ et/ou inférieure à 50 mm$^{-1}$.

Préférentiellement, la densité d'incision SD ou la densité moyenne d'incision SDmoy est comprise entre 30 mm$^{-1}$ et 40 mm$^{-1}$.

Dans un mode de réalisation préférentiel, chaque motif comprenant un ensemble de bloc comportant au moins un bloc, dans lequel ledit bloc a une hauteur radiale maximale Hmax à l'état neuf comprise entre 5,5 mm et 9 mm et de préférence entre 6 mm et 7,5 mm.

En diminuant la hauteur radiale du bloc, on améliore globalement la résistance au roulement du pneumatique ainsi que le comportement routier sur sol sec. Le fort élancement de la bande de roulement permet de compenser, au moins en partie, une hauteur radiale de bloc plus faible pour la performance d'évacuation de l'eau.

Dans un mode de réalisation préférentiel, chaque motif comprend au moins deux blocs adjacents et le nombre d'incision dans chaque bloc est supérieur ou égal à une incision. Le nombre d'incision et/ou l'arrangement desdites incisions est différent entre les deux blocs adjacents.

Dans un mode de réalisation préférentiel, chaque bloc est en matériau caoutchoutique. La composition de ce matériau caoutchoutique a une température de transition vitreuse Tg comprise entre -40°C et -10°C, et préférentiellement entre -35°C et -15°C. La température de transition vitreuse Tg du matériau caoutchoutique est mesurée au moyen d'un calorimètre différentiel (« differential scanning calorimeter »). L'analyse est réalisée selon les requis de la norme ASTM D3418.

La composition de ce matériau caoutchoutique a également un module de cisaillement G* mesuré à 60°C compris entre 0,5 MPa et 1,5 MPa, préférentiellement entre 0,8 MPa et 1,1 MPa. Le module de cisaillement G* caractérise la composition du matériau caoutchoutique. Cette propriété mécanique est mesurée sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm$^2$ de section), soumis à une sollicitation sinusoïdale en cisaillement simple alterné, à la fréquence de 10Hz, lors d'un balayage en température. Les résultats exploités correspondent au module complexe de cisaillement dynamique G* mesuré à 60°C. La valeur de G* mesurée à 60°C est représentative de la rigidité du matériau caoutchoutique, c'est-à-dire de sa résistance à la déformation élastique.

Au niveau de la composition chimique, le mélange élastomérique du ou des blocs comprend 100 pce (parties en poids pour cent parties en poids d'élastomère) d'un élastomère dinénique modifié). Par définition, un élastomère diénique est un homopolymère ou un copolymère, issu aux moins en partie des monomères diènes, c'est-à-dire des monomères porteurs de deux doubles liaisons carbone-carbone conjuguées ou non. Préférentiellement, le mélange élastomérique comprend l'élastomère diénique modifié à un taux au moins égal à 20 pce.

L'élastomère diénique modifié comprend au moins un groupe fonctionnel comprenant un atome de silicium, ce dernier se situant au sein de la chaîne principale, y compris les extrémités de chaîne. L'expression « atome se situant au sein de la chaîne principale de l'élastomère, y compris les extrémités de chaîne », s'entend ici comme n'étant pas un atome pendant (ou latéral) le long de la chaîne principale de l'élastomère mais étant un atome intégré à la chaîne principale. Ainsi, la composition de l'au moins un bloc comprend préférentiellement un mélange élastomérique, ledit mélange élastomérique comportant un élastomère diénique modifié comprenant au moins un groupe fonctionnel comprenant un atome de silicium, ce dernier se situant au sein de la chaîne principale de l'élastomère y compris les extrémités de chaîne.

L'élastomère diénique modifié comprenant un groupe fonctionnel comprenant un atome de silicium peut être un élastomère modifié comprenant au moins une fonction silanol située en une extrémité de la chaîne principale de l'élastomère. Des élastomères diéniques modifiés correspondant sont décrits notamment dans les documents EP 0 778 311 A1, WO 2011/042507 A1.

Alternativement et de manière préférentielle, le groupe fonctionnel se situe dans la chaîne élastomère principale, on dira alors que l'élastomère diénique est couplé ou encore fonctionnalisé en milieu de chaîne. L'atome de silicium du groupe fonctionnel lie alors les deux branches de la chaîne principale de l'élastomère diénique. L'atome de silicium du groupe fonctionnel peut être substitué par au moins une fonction alcoxy, éventuellement totalement ou partiellement hydrolysée en hydroxyle.

De manière particulièrement avantageuse, l'élastomère diénique modifié est majoritairement fonctionnalisé en milieu de chaîne par un groupe alcoxysilane lié aux deux branches de l'élastomère diénique modifié par l'intermédiaire de l'atome de silicium.

L'atome de silicium du groupe fonctionnel peut être substitué par au moins une fonction alcoxy, éventuellement totalement ou partielle hydrolysée en hydroxyle, l'atome de silicium peut également être substitué, directement ou par l'intermédiaire d'un radical hydrocarboné divalent, par au moins une autre fonction comprenant au moins un hétéroatome choisi parmi N, S, O, P. De préférence, l'atome de silicium est substitué par au moins une autre fonction par l'intermédiaire d'un radical hydrocarboné divalent, plus préférentiellement aliphatique linéaire en $C_1$- $C_{18}$. On peut, à titre d'exemple, citer parmi ces autres fonctions, les amines primaires, secondaires ou tertiaires, cycliques ou non, les isocyanates, les imines, les cyano, les thiols, les carboxylates, les époxydes, les phosphines primaires, secondaires ou tertiaires. L'autre fonction est de préférence une amine tertiaire, plus préférentiellement un groupement diéthylamino- ou diméthylamino-. La fonction alcoxy est de préférence méthoxy, éthoxy, butoxy ou propoxy. Des élastomères diéniques modifiés correspondant à ces variantes sont décrits notamment dans les documents WO 2009/133068 A1, WO 2015/018743 A1.

La modification de l'élastomère diénique par au moins un groupe fonctionnel comprenant un atome de silicium, n'exclut pas une autre modification de l'élastomère par exemple en extrémité de chaîne par une fonction amine introduite lors de l'initiation de la polymérisation, tel que décrit dans WO 2015/018774 A1, WO 2015/018772 A1.

En particulier, l'élastomère diénique modifié comprenant un groupe fonctionnel comprenant un atome de silicium est avantageusement un élastomère modifié comprenant au sein de sa structure au moins un groupe alcoxysilane lié à l'élastomère par l'atome de silicium, et au moins une fonction comprenant un atome d'azote.

Dans ce cas, l'élastomère diénique modifié présente avantageusement au moins deux, de préférence l'ensemble des caractéristiques suivantes :

- la fonction comprenant un atome d'azote est une amine tertiaire, plus particulièrement un groupement diéthylamino- ou diméthylamino-,

- la fonction comprenant un atome d'azote est portée par le groupe alcoxysilane par l'intermédiaire d'un groupement espaceur défini comme un radical hydrocarboné aliphatique en $C_1$-$C_{10}$, plus préférentiellement encore le radical hydrocarboné linéaire en $C_2$ ou $C_3$,

- le groupe alcoxysilane est un méthoxysilane ou un éthoxysilane, éventuellement partiellement ou totalement hydrolysé en silanol

De tels élastomères diéniques modifiées peuvent être obtenus par le procédé décrit dans la demande de brevet EP 2 285 852, suivie d'une hydrolyse de la fonction alcoxysilane en fonction silanol. La réaction d'hydrolyse de la fonction alcoxysilane en fonction silanol peut par exemple être conduite selon le mode opératoire décrit dans la demande de brevet EP 2 266 819 A1.

Préférentiellement, l'élastomère diénique modifié selon l'invention est un polymère de 1,3-butadiène, plus préférentiellement un copolymère butadiène-styrène (SBR).

Avantageusement, l'élastomère diénique modifié présente une température de transition vitreuse comprise dans un domaine allant de -105°C à -70°C, de préférence de -100°C à -75°C et de préférence de -95°C à -80°C.

L'élastomère diénique modifié selon l'invention peut être, selon différentes variantes, utilisé seul dans le mélange élastomérique ou en coupage avec au moins un autre élastomère diénique conventionnellement utilisé en pneumatique, qu'il soit étoilé, couplé, fonctionnalisé par exemple à l'étain ou au silicium, ou non.

Egalement du point de vue de sa composition chimique, le mélange élastomérique de la bande de roulement selon l'invention comprend une résine plastifiante de type résine thermoplastique à un taux au moins égal à 10 pce, de préférence de 10 à 100 pce, de préférence de 20 à 50 pce.

Dans un mode de réalisation non limitatif, le pneumatique a une certification hiver 3PMSF, ladite certification étant indiquée sur un flanc du pneumatique.

La présente invention sera mieux comprise à la lecture de la description détaillée de modes de réalisation pris à titre d'exemples nullement limitatifs et illustrés par les dessins annexés sur lesquels :

La figure 1 est une vue schématique montrant une partie d'une bande de roulement d'un pneumatique selon un premier mode de réalisation de l'invention ;

La figure 2 est une empreinte de la bande de roulement de la figure 1 ;

La figure 3 est une partie de l'empreinte de la figure 2 centrée sur une rainure oblique ;

La figure 4 est une partie de l'empreinte de la figure 2 centrée sur un motif ;

La figure 5 est une vue schématique montrant une partie d'une bande de roulement d'un pneumatique conforme à l'invention selon un second mode de réalisation ;

La figure 6 est une empreinte de la bande de roulement de la figure 5 ;

La figure 7 est une partie de l'empreinte de la figure 6 centrée sur une rainure oblique ;

La figure 8 est une partie de l'empreinte de la figure 6 centrée sur un motif ;

La figure 9 est une vue schématique montrant une partie d'une bande de roulement d'un pneumatique conforme à l'invention selon un troisième mode de réalisation de l'invention ;

La figure 10 est une empreinte de la bande de roulement de la figure 9 ;

La figure 11 est une partie de l'empreinte de la figure 10 centrée sur une rainure oblique ;

La figure 12 est une partie de l'empreinte de la figure 10 centrée sur un motif ;

La figure 13 est une partie d'une empreinte d'une bande de roulement d'un pneumatique conforme à l'invention selon un quatrième mode de réalisation de l'invention ;

La figure 14 est une partie de l'empreinte de la figure 13 centré sur un motif ;

La figure 15 est une partie d'une empreinte d'une bande de roulement d'un pneumatique conforme à l'invention selon un cinquième mode de réalisation de l'invention ;

La figure 16 est une partie d'une empreinte d'une bande de roulement multipas d'un pneumatique selon un sixième mode de réalisation de l'invention, ladite figure étant centrée sur un premier motif de pas P1 ;

La figure 17 est une partie d'une empreinte d'une bande de roulement multipas d'un pneumatique selon un sixième mode de réalisation de l'invention, ladite figure étant centrée sur un second motif de pas P2;

La figure 18 est une partie d'une empreinte d'une bande de roulement multipas d'un pneumatique selon un sixième mode de réalisation de l'invention, ladite figure étant centrée sur un troisième motif de pas P3.

L'invention n'est pas limitée aux modes de réalisation et variantes présentées et d'autres modes de réalisation et variantes apparaîtront clairement à l'homme du métier.

Sur les différentes figures, les éléments identiques ou similaires portent les mêmes références. C'est ainsi que les références utilisées pour identifier des éléments sur la bande de roulement sont reprises pour identifier ces mêmes éléments sur l'empreinte réalisée à partir de ladite bande de roulement.

Sur la figure 1 est représenté partiellement un pneumatique selon un premier mode de réalisation de l'invention. Ce pneumatique comprend une bande de roulement 10 et deux flancs 11A, 11B encadrant ladite bande de roulement 10. Les flancs 11A, 11B forment les parties latérales du pneumatique. Chaque flanc comporte à son extrémité un bourrelet destiné à prendre assise sur une jante d'une roue. Les flancs 11A, 11B délimitent la bande de roulement 10 au niveau d'un premier bord 14A et d'un second bord 14B. Le premier bord 14A et le second bord 14B encadrent un axe central 12 de la bande de roulement 10. Ce premier bord 14A et ce second bord 14B déterminent une largeur de bande de roulement W. Cette largeur de bande de roulement est ici supérieure à 140 mm. La bande de roulement 10 comprend également une partie centrale centrée sur l'axe central 12 et dont la largeur correspond à 80% de la largeur W de ladite bande de roulement 10. Cette partie centrale est délimitée par un troisième bord 15A et un quatrième bord 15B. La bande de roulement 10 comprend une pluralité de motifs 13 qui se succèdent selon la direction circonférentielle X. Chaque motif 13 comprend un bloc 17 qui s'étend, dans le mode de réalisation de la figure 1, de manière continue du premier bord 14A de la bande de roulement 10 jusqu'au second bord 14B. Ce bloc 17 est délimité par des rainures obliques 16A, 16B qui sont représentées en grisé sur la figure 1. Dans la bande de roulement, les rainures obliques 16A, 16B s'étendent du premier bord 14A et du second bord 14B jusqu'à l'axe central 12 de la bande de roulement. Ces rainures obliques 16 favorisent l'évacuation de l'eau hors de la bande de roulement lors d'un roulage sur une chaussée mouillée. Le bloc 17 comprend également une incision 18 pour favoriser l'adhérence du pneumatique sur un sol enneigé. Dans la bande de roulement, cette incision 18 s'étend de manière continue du premier bord 14A jusqu'au second bord 14B. Plus particulièrement, l'incision 18 divise ici le bloc 17 en deux parties de largeur globalement identique.

Chaque motif 13 présente un pas P. Ce pas P est déterminé comme la distance entre les centres de deux rainures obliques adjacentes encadrant un bloc 17. On notera que dans l'exemple de la figure 1, le pas P des différents motifs de la bande de roulement est identique.

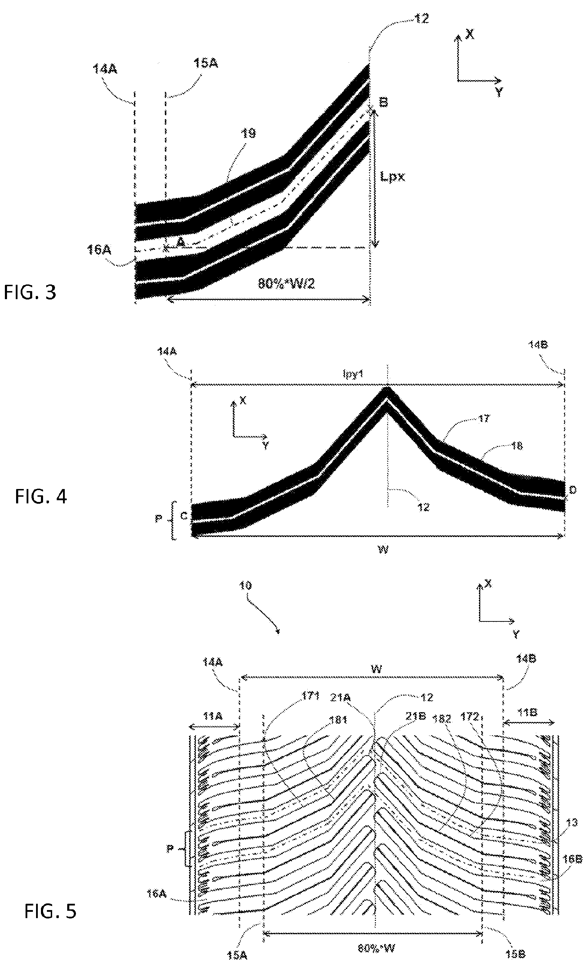

La figure 2 représente une empreinte de la bande de roulement de la figure 1. Cette empreinte a été réalisée de manière dynamique dans des conditions telles que décrites précédemment. Les éléments en creux tels que les rainures obliques 16A, 16B, les incisions 18 sont représentés en blanc. Les blocs 17 sont illustrés en noir. A partir de cette empreinte, il est possible de déterminer un élancement E des rainures obliques (figure 3) et une densité d'incisions SD dans les blocs 17 (figure 4).

La figure 3 représente une partie de l'empreinte de la figure 2 centrée sur une rainure oblique 16A. Dans la bande de roulement cette rainure oblique 16A débute à partir du premier bord 14A et s'arrête au niveau de l'axe central 12. Il est possible de déterminer un élancement E de la rainure oblique 16A dans la partie centrale de la bande de roulement, c'est-à-dire le niveau de son inclinaison dans cette partie centrale. Comme il a déjà été précisé, la partie centrale est délimitée en partie par le troisième bord 15A. L'élancement E est déterminé à partir d'une longueur projetée Lpx de la rainure oblique 16A selon la direction circonférentielle X et de la moitié de la largeur de la partie centrale de

$$E = \frac{Lpx}{0,4*W}$$

la bande de roulement 0,8*W/2, tel que $\qquad$ . Plus particulièrement, la longueur projetée Lpx est mesurée entre un premier point A et un second point B. Le point A est déterminé à l'intersection entre une médiane 19 de la rainure oblique 16A et le troisième bord 15A. La médiane 19 de la rainure oblique 16A sépare ladite rainure oblique 16A en deux demi-rainures obliques de même largeur. Le point B est déterminé à l'intersection entre la médiane 19 de la rainure oblique 16A et l'axe central 12 de la bande de roulement 10. L'élancement E est ici compris entre 0,85 et 1,5 et de préférence entre 0,87 et 1,1.

La figure 4 représente une partie de l'empreinte de la figure 2 centrée sur un bloc 17. Comme il a déjà été précisé, le bloc 17 s'étend de manière continue du premier bord 14A jusqu'au second bord 14B. L'incision 18 s'étend également de manière continue entre un troisième point C et un quatrième point D. Le troisième point C est déterminé à l'intersection entre l'incision 18 et le premier bord 14A. Le quatrième point D est déterminé à l'intersection entre l'incision 18 et le second bord 14B. La densité d'incision SD dans le bloc 17 est comprise entre 10 mm$^{-1}$ et 42 mm$^{-1}$ et de préférence entre 30 mm$^{-1}$ et 40 mm$^{-1}$. Cette densité d'incision SD correspond ici au rapport entre la longueur projetée lpy1 de l'unique incision 18 selon une direction axiale Y sur le produit du pas P du motif et de la largeur W de la bande

$$SD = \frac{lpy1}{P*W} * 1000$$

de roulement, l'ensemble étant multiplié par 1000, tel que $\qquad$ . Dans le mode de réalisation de la

$$SD = \frac{1000}{P}$$

figure 4, la longueur projetée lpy1 est égale à la largeur W de la bande de roulement. Dès lors $\qquad$ . Ainsi pour un pas de 30 mm, la densité d'incision dans le bloc 17 est de 33, 33 mm$^{-1}$.

Sur la figure 5 est représenté partiellement un pneumatique selon un second mode de réalisation de l'invention. Ce pneumatique comprend une bande de roulement 10 et deux flancs 11A, 11B encadrant ladite bande de roulement 10. Les flancs 11A, 11B forment les parties latérales du pneumatique. Chaque flanc comporte à son extrémité un bourrelet destiné à prendre assise sur une jante d'une roue. Les flancs 11A, 11B délimitent la bande de roulement 10 au niveau d'un premier bord 14A et d'un second bord 14B. Le premier bord 14A et le second bord 14B encadrent un axe central 12 de la bande de roulement 10. Ce premier bord 14A et ce second bord 14B déterminent une largeur de bande de roulement W. Cette largeur de bande de roulement est ici supérieure à 140 mm. La bande de roulement 10 comprend également une partie centrale centrée sur l'axe central 12 et dont la largeur correspond à 80% de la largeur W de ladite bande de roulement 10. Cette partie centrale est délimitée par un troisième bord 15A et un quatrième bord 15B. La bande de roulement 10 comprend une pluralité de motifs 13 qui se succèdent selon la direction circonférentielle X. Chaque motif 13 comprend un ensemble de blocs comprenant ici un premier bloc 171 et un second bloc 172. Ces blocs 171, 172 s'étendent respectivement à partir du premier bord 14A et à partir du second bord 14B de la bande de roulement 10 jusqu'à l'axe central 12. Ces blocs 171, 172 sont délimités par des rainures obliques 16A, 16B. Dans la bande de roulement de la figure 5, les rainures obliques 16A, 16B s'étendent respectivement à partir du premier bord 14A et à partir du second bord 14B jusqu'à l'axe central 12. Ces rainures obliques 16A, 16B favorisent l'évacuation de l'eau hors de la bande de roulement lors d'un roulage sur une chaussée mouillée. Chaque bloc 171, 172 comprend respectivement une première incision 181 et une seconde incision 182 pour favoriser l'adhérence du pneumatique sur un sol enneigé. Dans l'empreinte de la bande de roulement de la figure 5, chaque incision 181, 182 s'étend respectivement de manière continue à partir du premier bord 14A ou du second bord 14B jusqu'à une extrémité 21A, 21B du bloc 171, 17

2. Plus particulièrement, chaque incision 181, 182 divise le bloc associé 171, 172 en deux parties de largeur globalement identique.

Chaque motif 13 présente un pas P. Ce pas P est déterminé comme la distance entre les centres de deux rainures obliques adjacentes encadrant un bloc 171, 172. On notera que dans l'exemple de la figure 5, le pas P des différents motifs de la bande de roulement est identique.

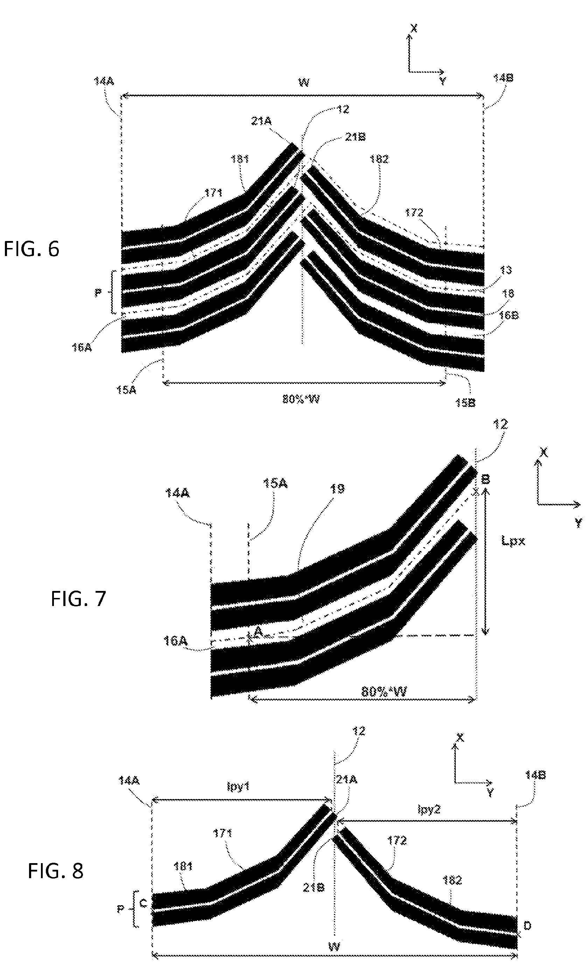

La figure 6 représente une empreinte de la bande de roulement de la figure 5. Cette empreinte a été réalisée de manière dynamique dans des conditions telles que décrites précédemment. Les éléments en creux tels que les rainures obliques 16A, 16B, les incisions 181, 182 sont représentés en blanc. Les blocs 171, 172 sont illustrés en noir. A partir de cette empreinte, il est possible de déterminer un élancement E des rainures obliques (figure 7) et une densité d'incisions SD dans les blocs 171, 172 (figure 8).

La figure 7 représente une partie de l'empreinte de la figure 6 centrée sur une rainure oblique 16A. Dans la bande de roulement cette rainure oblique 16A débute à partir du premier bord 14A et s'arrête au niveau de l'axe central 12. Il est possible de déterminer un élancement E de la rainure oblique 16A dans la partie centrale de la bande de roulement, c'est-à-dire le niveau de son inclinaison dans cette partie centrale. Comme il a déjà été précisé, la partie centrale est délimitée en partie par le troisième bord 15A. L'élancement E est déterminé à partir d'une longueur projetée Lpx de la rainure oblique 16A selon la direction circonférentielle X et de la moitié de la largeur de la partie centrale de

$$E = \frac{Lpx}{0{,}4*W}$$

la bande de roulement 0,8*W/2, tel que . Plus particulièrement, la longueur projetée Lpx est mesurée entre un premier point A et un second point B. Le point A est déterminé à l'intersection entre une médiane 19 de la rainure oblique 16A et le troisième bord 15A. La médiane 19 de la rainure oblique 16A sépare ladite rainure oblique 16A en deux demi-rainures obliques de même largeur. Le point B est déterminé à l'intersection entre la médiane 19 de la rainure oblique 16 et l'axe central 12 de la bande de roulement 10. L'élancement E est ici compris entre 0,85 et 1,5, et de préférence entre 0,87 et 1,1.

La figure 8 représente une partie de l'empreinte de la figure 6 centrée sur le premier bloc 171 et le second bloc 172. Comme il a déjà été précisé, le premier bloc 171 s'étend du premier bord 14A jusqu'à l'axe central 12 de la bande de roulement et le second bloc 172 s'étend du second bord 14B jusqu'à l'axe central 12 de la bande de roulement. La première incision 181 du premier bloc 171 s'étend de manière continue entre un troisième point C et l'extrémité 21A du bloc 171. Le troisième point C est déterminé à l'intersection entre la première incision 181 et le premier bord 14A. La seconde incision 182 du second bloc 172 s'étend de manière continue entre un quatrième point D et l'extrémité 21B du bloc 172. Le quatrième point D est déterminé à l'intersection entre la seconde incision 182 et le second bord 14B. La densité d'incision SD dans l'ensemble de blocs comprenant le premier bloc 171 et le second bloc 172 est comprise entre 10 mm$^{-1}$ et 42 mm$^{-1}$ et de préférence entre 30 mm$^{-1}$ et 40 mm$^{-1}$. Cette densité d'incision SD correspond au rapport entre la longueur projetée lpy1 et lpy2 de la première incision 181 et de la seconde incision 182 selon une direction axiale Y sur le produit du pas P du motif et de la largeur W de la bande de roulement, l'ensemble étant multiplié par

$$SD = \frac{lpy1 + lpy2}{P*W} * 1000$$

1000, tel que .

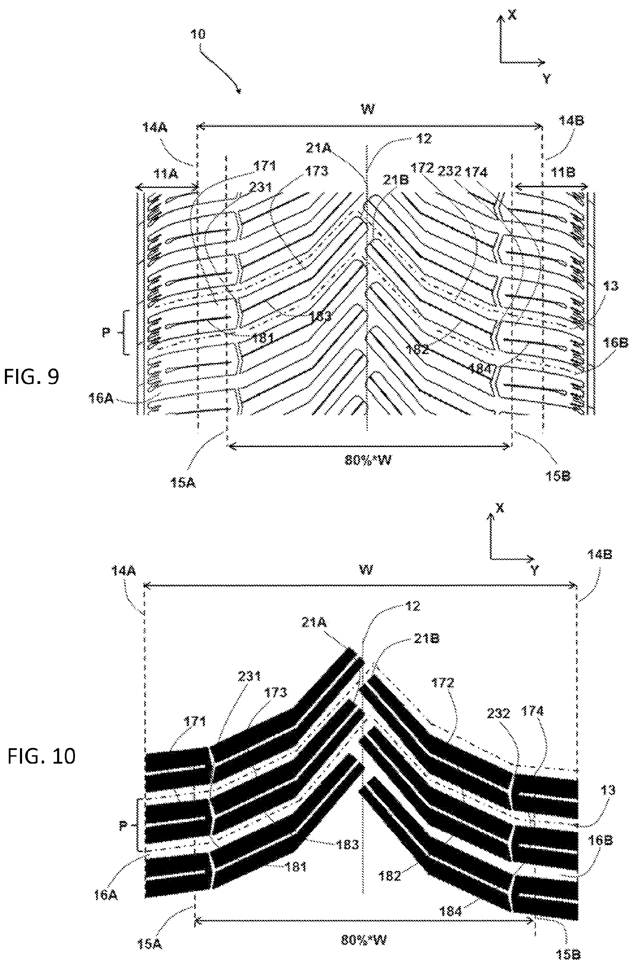

Sur la figure 9 est représenté partiellement un pneumatique selon un troisième mode de réalisation de l'invention. Ce pneumatique comprend une bande de roulement 10 et deux flancs 11A, 11B encadrant ladite bande de roulement 10. Les flancs 11A, 11B délimitent la bande de roulement 10 au niveau d'un premier bord 14A et d'un second bord 14B. Le premier bord 14A et le second bord 14B encadrent un axe central 12 de la bande de roulement 10. Ce premier bord 14A et ce second bord 14B déterminent une largeur de bande de roulement W. Cette largeur de bande de roulement est ici supérieure à 140 mm. La bande de roulement 10 comprend également une partie centrale centrée sur l'axe central 12 et dont la largeur correspond à 80% de la largeur W de ladite bande de roulement 10. Cette partie centrale est délimitée par un troisième bord 15A et un quatrième bord 15B. La bande de roulement 10 comprend une pluralité de motifs 13 qui se succèdent selon la direction circonférentielle X. Chaque motif 13 comprend un ensemble de blocs comprenant ici 4 blocs, dont un premier bloc 171, un second bloc 172, un troisième bloc 173 et un quatrième bloc 174. Le premier bloc 171 et le troisième bloc 173 sont situés du même côté par rapport à l'axe central 12. De la même manière, le second bloc 172 et le quatrième bloc 174 sont situés du même côté par rapport à l'axe central 12 en opposition par rapport au premier bloc 171 et au troisième bloc 173. Le premier bloc 171 et le troisième bloc 173 sont séparés par une première découpure 231. Le second bloc 172 et le quatrième bloc 174 sont séparés par une seconde découpure 232. La première découpure 231 et la seconde découpure 232 sont ici des rainures qui vont venir découpler les blocs entre eux afin de faciliter la mise à plat de la bande de roulement lors des roulages. En variante, dans le cas où la première découpure 231 est une incision, on considère que les deux blocs 171, 173 ne forment qu'un seul bloc. De la même manière, dans le cas où la seconde découpure 232 est une incision, on considère que les deux blocs 172, 174 ne forment qu'un seul bloc. Ainsi, le premier bloc 171 et le quatrième bloc 174 s'étendent respectivement à partir du premier bord 14A et à partir du second bord 14B de la bande de roulement 10 jusqu'à la première découpure 231 et la seconde découpure 232. Le second bloc 172 et le quatrième bloc 174 s'étendent respectivement à partir de la première découpure 231 et de la seconde découpure 232 jusqu'à l'axe central 12. Les blocs 171, 172, 173, 174 sont délimités par des rainures obliques 16A, 16B. Dans la bande de roulement de la figure 5, les rainures obliques 16A, 16B s'étendent respectivement à partir du premier bord 14A et à partir du second bord 14B jusqu'à l'axe central 12. Ces rainures obliques 16A, 16B favorisent l'évacuation de l'eau hors de la bande de roulement lors d'un roulage sur une chaussée mouillée. Chaque bloc 171, 172, 173, 174 comprend respectivement une première incision 181, une seconde incision 182, une troisième incision 183 et une quatrième incision 184 pour favoriser l'adhérence du pneumatique sur un sol enneigé. Dans l'empreinte de la bande de roulement de la figure 9, la première incision 181 et la quatrième incision 184 s'étendent respectivement à partir du premier bord 14A ou du second bord 14B jusqu'à une extrémité qui ne débouche pas ici sur la première découpure 231 ou la seconde découpure 232. La seconde incision 182 et la troisième incision 183 s'étendent respectivement à partir de la seconde découpure 232 et de la première découpure 231 jusqu'à l'extrémité 21B du bloc 172 ou jusqu'à l'extrémité 21A du bloc 173. Chaque incision 181, 182, 183, 184 divise les blocs associé 171, 172, 173, 174 en deux demi-blocs de largeur globalement identique.

Chaque motif 13 présente un pas P. Ce pas P est déterminé comme la distance entre les centres de deux rainures obliques adjacentes encadrant un bloc 171, 172, 173, 174. On notera que dans l'exemple de la figure 9, le pas P des différents motifs de la bande de roulement est identique.

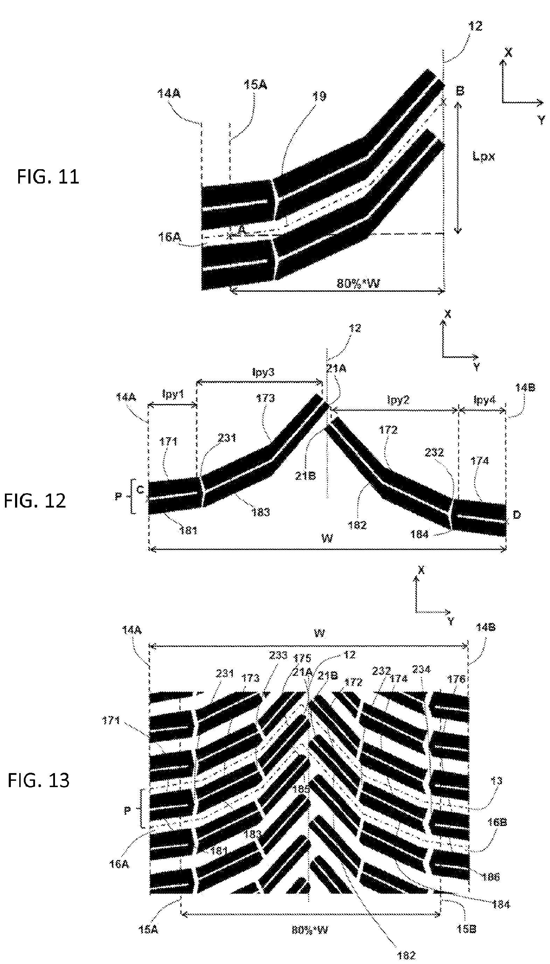

La figure 10 représente une empreinte de la bande de roulement de la figure 9. Cette empreinte a été réalisée de manière dynamique dans des conditions telles que décrites précédemment. Les éléments en creux tels que les rainures obliques 16A, 16B, les incisions 181, 182, 183, 184 sont représentés en blanc. Les blocs 171, 172, 173, 174 sont illustrés en noir. A partir de cette empreinte, il est possible de déterminer un élancement E des rainures obliques (figure 11) et une densité d'incisions SD dans les blocs 171, 172, 173, 174 (figure 12).

La figure 11 représente une partie de l'empreinte de la figure 10 centrée sur une rainure oblique 16A. Dans la bande de roulement cette rainure oblique 16A débute à partir du premier bord 14A et s'arrête au niveau de l'axe central 12. Il est possible de déterminer un élancement E de la rainure oblique 16A dans la partie centrale de la bande de roulement, c'est-à-dire le niveau de son inclinaison dans cette partie centrale. Comme il a déjà été précisé, la partie centrale est délimitée en partie par le troisième bord 15A. L'élancement E est déterminé à partir d'une longueur projetée Lpx de la rainure oblique 16A selon la direction circonférentielle X et de la moitié de la largeur de la partie centrale de

$$E = \frac{Lpx}{0,4*W}$$

la bande de roulement 0,8*W/2, tel que . Plus particulièrement, la longueur projetée Lpx est mesurée entre un premier point A et un second point B. Le point A est déterminé à l'intersection entre une médiane 19 de la rainure oblique 16A et le troisième bord 15A. La médiane 19 de la rainure oblique 16A sépare ladite rainure oblique 16A en deux demi-rainures obliques de même largeur. Le point B est déterminé à l'intersection entre la médiane 19 de la rainure oblique 16 et l'axe central 12 de la bande de roulement 10. L'élancement E est ici compris entre 0,85 et 1,5, et de préférence entre 0,87 et 1,1.

La figure 12 représente une partie de l'empreinte de la figure 10 centrée sur le premier bloc 171, le second bloc 172, le troisième bloc 173 et le quatrième bloc 174. Comme il a déjà été précisé, le premier bloc 171 s'étend du premier bord 14A jusqu'à la première découpure 231. Le troisième bloc 173 s'étend de la première découpure 231 jusqu'à l'extrémité 21A du bloc 173. Le second bloc 172 s'étend à partir de l'extrémité 21B du bloc 172 jusqu'à la seconde découpure 232. Le quatrième bloc s'étend de la seconde découpure 232 jusqu'au second bord 14B. La première incision 181 du premier bloc 171 s'étend entre un troisième point C et une extrémité proche de la première découpure 231. Le troisième point C est déterminé à l'intersection entre la première incision 181 et le premier bord 14A. La troisième incision 183 s'étend à partir de la première découpure 231 jusqu'à l'extrémité 21A du bloc 173. La seconde incision 182 s'étend à partir de l'extrémité 21B du second bloc 172 jusqu'à la seconde découpure 232. La quatrième incision 184 s'étend à partir de la seconde découpure 232 jusqu'au quatrième point D. Le quatrième point D est déterminé à l'intersection entre la quatrième incision 184 et le second bord 14B. La densité d'incision SD dans l'ensemble de blocs comprenant le premier bloc 171, le second bloc 172, le troisième bloc 173 et le quatrième bloc 174 est comprise entre 10 mm$^{-1}$ et 42 mm$^{-1}$ et de préférence entre 30 mm$^{-1}$ et 40 mm$^{-1}$. Cette densité d'incision SD correspond au rapport entre la longueur projetée lpy1, lpy2, lpy3 et lpy4 de la première incision 181, de la seconde incision 182, de la troisième incision 183 et de la quatrième incision 184 selon une direction axiale Y sur le produit du pas P du motif et de la largeur W de la bande

$$SD = \frac{(lpy1 + lpy2 + lpy3 + lpy4)}{P * W} * 1000$$

de roulement, l'ensemble étant multiplié par 1000, tel que                                                                                    .

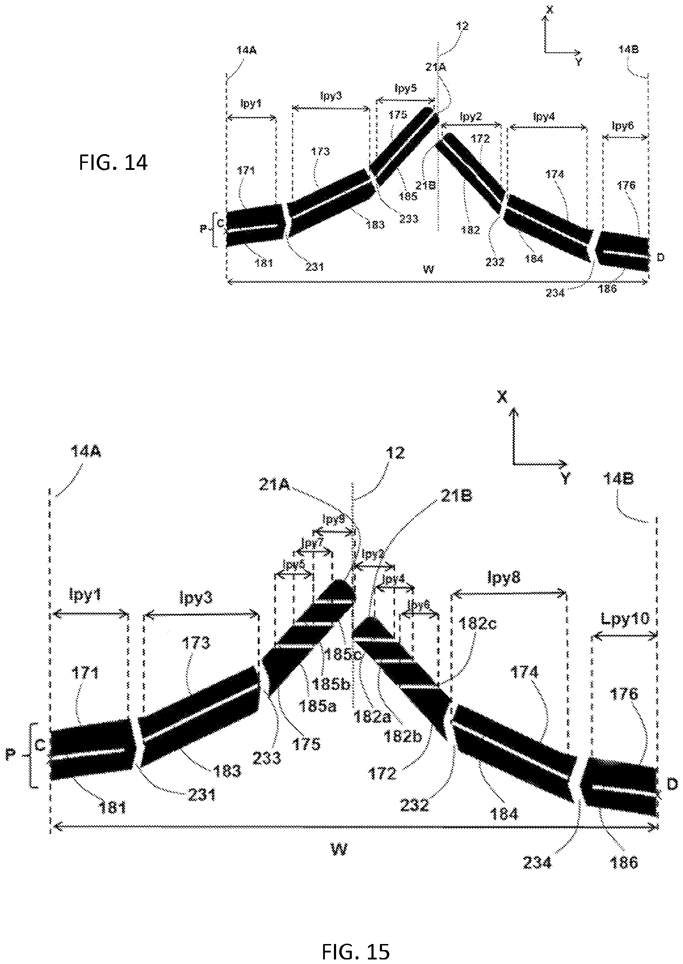

Sur la figure 13 est représenté partiellement un pneumatique selon un quatrième mode de réalisation de l'invention. Comme dans les autres modes de réalisation précédemment décrit, ce pneumatique comprend une bande de roulement 10 et deux flancs 11A, 11B encadrant ladite bande de roulement 10. Les flancs 11A, 11B délimitent la bande de roulement 10 au niveau d'un premier bord 14A et d'un second bord 14B. Le premier bord 14A et le second bord 14B encadrent un axe central 12 de la bande de roulement 10. Ce premier bord 14A et ce second bord 14B déterminent ainsi une largeur de bande de roulement W. Cette largeur de bande de roulement est ici supérieure à 140 mm. La bande de roulement 10 comprend également une partie centrale centrée sur l'axe central 12 et dont la largeur correspond à 80% de la largeur W de ladite bande de roulement 10. Cette partie centrale est délimitée par un troisième bord 15A et un quatrième bord 15B. La bande de roulement 10 comprend une pluralité de motifs 13 qui se succèdent selon la direction circonférentielle X. Chaque motif 13 comprend un ensemble de blocs comprenant ici 6 blocs, dont un premier bloc 171, un second bloc 172, un troisième bloc 173, un quatrième bloc 174, un cinquième bloc 175, un sixième bloc 176. Le premier bloc 171, le troisième bloc 173 et le cinquième bloc 175 sont situés du même côté par rapport à l'axe central 12. De la même manière, le second bloc 172, le quatrième bloc 174 et le sixième bloc 176 sont situés du même côté par rapport à l'axe central 12 en opposition par rapport au premier bloc 171, au troisième bloc 173 et au cinquième bloc 175. Le premier bloc 171 et le troisième bloc 173 sont séparés par une première découpure 231. Le second bloc 172 et le quatrième bloc 174 sont séparés par une seconde découpure 232. Le troisième bloc 173 et le cinquième bloc 175 sont séparés par une troisième découpure 233. Le quatrième bloc 174 et le sixième bloc 176 sont séparés par une quatrième découpure 234. La première découpure 231, la seconde découpure 232, la troisième découpure 233, la quatrième découpure 234 sont ici des rainures qui vont venir découpler les blocs entre eux afin de faciliter la mise à plat de la bande de roulement lors des roulages. En variante, la première découpure 231, la seconde découpure 232, la troisième découpure 233 et la quatrième découpure 234 sont des rainures. Ainsi, le premier bloc 171 et le sixième bloc 176 s'étendent respectivement à partir du premier bord 14A et à partir du second bord 14B de la bande de roulement 10 jusqu'à la première découpure 231 et la quatrième découpure 234. Le troisième bloc 173 et le quatrième bloc 174 s'étendent respectivement à partir de la première découpure 231 et de la quatrième découpure 234 jusqu'à la troisième découpure 233 et la seconde découpure 232. Le cinquième bloc 175 et le second bloc 172 s'étendent respectivement à partir de la troisième découpure 233 et de la seconde découpure 232 jusqu'à l'axe central 12. Les blocs 171, 172, 173, 174, 175, 176 sont délimités par des rainures obliques 16A, 16B. Dans la bande de roulement de la figure 13, les rainures obliques 16A, 16B s'étendent respectivement à partir du premier bord 14A et à partir du second bord 14B jusqu'à l'axe central 12. Comme il a déjà été indiqué, ces rainures obliques 16A, 16B favorisent l'évacuation de l'eau hors de la bande de roulement lors d'un roulage sur une chaussée mouillée. Chaque bloc 171, 172, 173, 174, 175, 176 comprend respectivement une première incision 181, une seconde incision 182, une troisième incision 183, une quatrième incision 184, une cinquième incision 185 et une sixième incision 186 pour favoriser l'adhérence du pneumatique sur un sol enneigé. Dans la partie d'empreinte de la bande de roulement de la figure 14, la première incision 181 et la sixième incision 186 s'étendent respectivement à partir du premier bord 14A ou du second bord 14B jusqu'à une extrémité qui ne débouche pas ici sur la première découpure 231 ou la quatrième découpure 234. La troisième incision 183 et la quatrième incision 184 s'étendent respectivement à partir de la première découpure 231 et de la quatrième découpure 234 jusqu'à la troisième découpure 233 et jusqu'à la seconde découpure 232. La cinquième incision 185 et la seconde incision 182 s'étendent respectivement à partir de la troisième découpure 233 et de la seconde découpure 232 jusqu'à l'extrémité 21A du bloc 175 et jusqu'à l'extrémité 21B du bloc 172. Chaque incision 181, 182, 183, 184, 185, 186 divise les blocs associés 171, 172, 173, 174, 175, 176 en deux demi-blocs de largeur globalement identique.

Chaque motif 13 présente un pas P. Ce pas P est déterminé comme la distance entre les centres de deux rainures obliques adjacentes encadrant un bloc 171, 172, 173, 174, 175, 176. On notera que dans l'exemple de la figure 13, le pas P des différents motifs de la bande de roulement est identique.

Comme il a déjà été précisé, la figure 14 représente une partie d'une empreinte de la bande de roulement de la figure 13. Cette empreinte a été réalisée de manière dynamique dans des conditions telles que décrites précédemment. Les éléments en creux tels que les rainures obliques 16A, 16B, les incisions 181, 182, 183, 184, 185, 186 sont représentés en blanc. Les blocs 171, 172, 173, 174, 175, 176 sont illustrés en noir. A partir d'une empreinte, il est possible de déterminer un élancement E des rainures obliques et une densité d'incisions SD dans les blocs 171, 172, 173, 174, 175, 176.

La détermination de l'élancement E se fait de la même manière que dans les exemples des figures 8, 12. Cet élancement E est compris entre 0,85 et 1,5 et de préférence entre 0,87 et 1,1.

La figure 14 représente ainsi une partie de l'empreinte de la bande de roulement de la figure 13 centrée sur le premier bloc 171, le second bloc 172, le troisième bloc 173, le quatrième bloc 174, le cinquième bloc 175 et le sixième bloc 176. Comme il a déjà été précisé, le premier bloc 171 s'étend du premier bord 14A jusqu'à la première découpure 231. Le troisième bloc 173 s'étend de la première découpure 231 jusqu'à la troisième découpure 233. Le cinquième bloc 175 s'étend de la troisième découpure 233 jusqu'à l'axe central 12. Le second bloc 172 s'étend de l'axe central 12 jusqu'à la seconde découpure 232. Le quatrième bloc 174 s'étend de la seconde découpure jusqu'à la quatrième découpure 234. Le sixième bloc 176 s'étend de la quatrième découpure 234 jusqu'au second bord 14B. La première incision 181 du premier bloc 171 s'étend entre un troisième point C et une extrémité proche de la première découpure 231. Le troisième point C est déterminé à l'intersection entre la première incision 181 et le premier bord 14A. La troisième incision 183 s'étend à partir de la première découpure 231 jusqu'à la troisième découpure 233. La cinquième incision 185 s'étend à partir de la troisième découpure 233 jusqu'à l'extrémité 21A du bloc 175. La seconde incision 182 s'étend à partir de l'extrémité 21B du second bloc 172 jusqu'à la seconde découpure 232. La quatrième incision 184 s'étend à partir de la seconde découpure 232 jusqu'à la quatrième découpure 234. La sixième incision 176 s'étend à partir d'une extrémité de cette incision proche de la quatrième découpure 234 jusqu'au quatrième point D. Le quatrième point D est déterminé à l'intersection entre la sixième incision 186 et le second bord 14B. La densité d'incision SD dans l'ensemble de blocs comprenant le premier bloc 171, le second bloc 172, le troisième bloc 173, le quatrième bloc 174, le cinquième bloc 175 et le sixième bloc 176 est comprise entre 10 mm$^{-1}$ et 42 mm$^{-1}$ et de préférence entre 30 mm$^{-1}$ et 40 mm$^{-1}$. Cette densité d'incision SD correspond au rapport entre la longueur projetée lpy1, lpy2, lpy3, lpy4, lpy5, lpy6 de la première incision 181, de la seconde incision 182, de la troisième incision 183, de la quatrième incision 184, de la cinquième incision 185 et de la sixième incision 186 selon une direction axiale Y sur le produit du pas P du motif et de la largeur W de la bande de roulement, l'ensemble étant multiplié par 1000, tel que

$$SD = \frac{(lpy1+lpy2+lpy3+lpy4+lpy5+lpy6)}{P*W} * 1000.$$

La figure 15 représente une partie d'une empreinte d'une bande de roulement selon un cinquième mode de réalisation de l'invention. Cette partie d'empreinte est centrée sur les blocs d'un motif de cette bande de roulement. Plus particulièrement, cette partie d'empreinte comprend, comme dans le mode de réalisation précédent, un premier bloc 171, un second bloc 172, un troisième bloc 173, un quatrième bloc 174, un cinquième bloc 175 et un sixième bloc 176. Le premier bloc 171 s'étend du premier bord 14A jusqu'à une première découpure 231. Le troisième bloc 173 s'étend de la première découpure 231 jusqu'à la troisième découpure 233. Le cinquième bloc 175 s'étend de la troisième découpure 233 jusqu'à l'axe central 12. Le second bloc 172 s'étend de l'axe central 12 jusqu'à la seconde découpure 232. Le quatrième bloc 174 s'étend de la seconde découpure jusqu'à la quatrième découpure 234. Le sixième bloc 176 s'étend de la quatrième découpure 234 jusqu'au second bord 14B. Les différents blocs 171, 172, 173, 174, 175, 176 comprennent au moins une incision. Ainsi, le premier bloc 171 comprend une première incision 181, le troisième bloc 173 comprend une troisième incision 183. Le cinquième bloc 175 comprend quant à lui trois incisions : une cinquième incision 185a, une cinquième incision bis 185b et une cinquième incision ter 185c. De la même manière, le second bloc 172 comprend trois incisions : une seconde incision 182a, une seconde incision bis 182b et une seconde incision ter 182c. Le quatrième bloc 174 comprend une quatrième incision 184 et le sixième bloc 176 comprend une sixième incision 186. Plus particulièrement, la première incision 181 du premier bloc 171 s'étend entre un troisième point C et une extrémité proche de la première découpure 231. Le troisième point C est déterminé à l'intersection entre la première incision 181 et le premier bord 14A. La troisième incision 183 s'étend à partir de la première découpure 231 jusqu'à la troisième découpure 233. La cinquième incision 185a, la cinquième incision bis 185b et la cinquième incision ter 185c s'étendent globalement selon la direction axiale à partir d'une première paroi latérale du cinquième bloc 175 jusqu'à une seconde paroi latérale de ce cinquième bloc 175. De la même manière, la seconde incision 182a, la seconde incision bis 182b et la seconde incision ter 182c s'étendent globalement selon la direction axiale à partir d'une première paroi du second bloc 172 jusqu'à une seconde paroi latérale de ce second bloc 172. La quatrième incision 184 s'étend à partir de la seconde découpure 232 jusqu'à la quatrième découpure 234. La sixième incision 186 s'étend à partir d'une extrémité de cette incision proche de la quatrième découpure 234 jusqu'à à un quatrième point D. Le quatrième point D est déterminé à l'intersection entre la sixième incision 186 et le second bord 14B. Les incisions 181, 183, 184, 186 divisent leur bloc associé 171, 173, 174, 176 en deux demi-blocs de largeur globalement identique. La partie de l'empreinte de la bande de roulement illustrée à la figure 15 comprend ainsi au moins deux blocs adjacents, tels que le couple de blocs comprenant le troisième bloc 173 et le cinquième bloc 175 ou le couple de blocs comprenant le second bloc 172 et le quatrième bloc 174. Ces blocs adjacents présentent un nombre d'incisions différent et également un arrangement d'incisions différent. La densité d'incision SD dans l'ensemble de blocs comprenant le premier bloc 171, le second bloc 172, le troisième bloc 173, le quatrième bloc 174, le cinquième bloc 175 et le sixième bloc 176 est comprise entre 10

mm$^{-1}$ et 42 mm$^{-1}$ et de préférence entre 30 mm$^{-1}$ et 40 mm$^{-1}$. Cette densité d'incision SD correspond au rapport entre la longueur projetée lpy1, lpy2, lpy3, lpy4, lpy5, lpy6, lpy7, lpy8, lpy9 de la première incision 181, de la seconde incision 182a, de la seconde incision bis 182b, de la seconde incision ter 182c, de la troisième incision 183, de la quatrième incision 184, de la cinquième incision 185a, de la cinquième incision bis 185b, de la cinquième incision ter 185c et de la sixième incision 186 selon une direction axiale Y sur le produit du pas P du motif et de la largeur W de la bande de roulement, l'ensemble étant multiplié par 1000, tel que

$$SD = \frac{(lpy1+lpy2+lpy3+lpy4+lpy5+lpy6+lpy7+lpy8+lpy9+lpy10)}{P*W} * 1000.$$

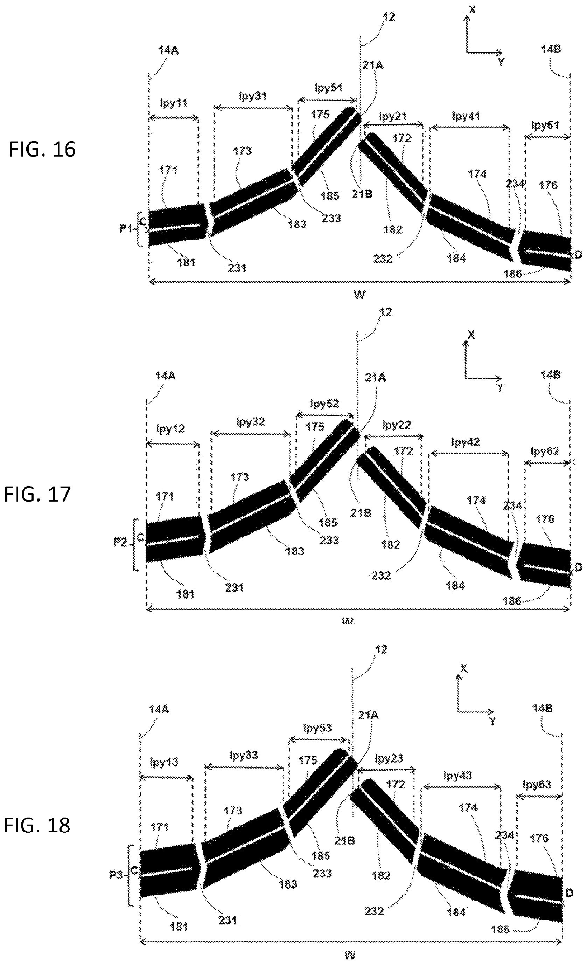

Les figures 16, 17 et 18 illustrent trois motifs d'une même bande de roulement appartenant à trois types de motifs différents. La figure 16 illustre ainsi un premier motif présentant un premier pas P1. Ce premier motif comprend un premier bloc 171, un second bloc 172, un troisième bloc 173, un quatrième bloc 174, un cinquième bloc 175 et un sixième bloc 176. Le premier bloc 171 s'étend du premier bord 14A jusqu'à une première découpure 231. Le troisième bloc 173 s'étend de la première découpure 231 jusqu'à la troisième découpure 233. Le cinquième bloc 175 s'étend de la troisième découpure 233 jusqu'à l'axe central 12. Le second bloc 172 s'étend de l'axe central 12 jusqu'à la seconde découpure 232. Le quatrième bloc 174 s'étend de la seconde découpure 232 jusqu'à la quatrième découpure 234. Le sixième bloc 176 s'étend de la quatrième découpure 234 jusqu'au second bord 14B. Les différents blocs 171, 172, 173, 174, 175, 176 comprennent chacun une incision. Ainsi, le premier bloc 171 comprend une première incision 181 qui s'étend entre un troisième point C et une extrémité proche de la première découpure 231. Le troisième point C est déterminé à l'intersection entre la première incision 181 et le premier bord 14A. Le troisième bloc 173 comprend une troisième incision 183 qui s'étend entre la première découpure 231 et la troisième découpure 233. Le cinquième bloc 175 comprend une cinquième incision 185 qui s'étend entre la troisième découpure 233 et une extrémité 21A du cinquième bloc 175. Le second bloc 172 comprend une seconde incision 182 qui s'étend entre une extrémité 21B du second bloc 172 et une seconde découpure 232. Le quatrième bloc 174 comprend une quatrième incision 184 qui s'étend entre la seconde découpure 232 et la quatrième découpure 234. Le sixième bloc 176 comprend une sixième incision 186 qui s'étend entre la quatrième découpure 234 et un quatrième point D. Le quatrième point D est déterminé à l'intersection entre la sixième incision 186 et le second bord 14B. Les incisions 181, 182, 183, 184, 185, 186 divisent leur bloc associé 171, 172, 173, 174, 175, 176 en deux demi-blocs de largeur globalement identique. La densité d'incision SD1 dans l'ensemble de blocs de pas P1 comprenant le premier bloc 171, le second bloc 172, le troisième bloc 173, le quatrième bloc 174, le cinquième bloc 175 et le sixième bloc 176 correspond au rapport entre la longueur projetée lpy11, lpy21, lpy31, lpy41, lpy51, lpy61 de la première incision 181, de la seconde incision 182, de la troisième incision 183, de la quatrième incision 184, de la cinquième incision 185, de la sixième incision 186 selon une direction axiale Y sur le produit du pas P1 du motif et de la largeur W de la bande de roulement, l'ensemble étant multiplié par 1000, tel que

$$SD1 = \frac{(lpy11+lpy21+lpy31+lpy41+lpy51+lpy61)}{P1*W} * 1000$$

.

La figure 17 illustre un second motif présentant un second pas P2. Comme pour le premier motif, ce second motif comprend un premier bloc 171, un second bloc 172, un troisième bloc 173, un quatrième bloc 174, un cinquième bloc 175 et un sixième bloc 176. Les différents blocs 171, 172, 173, 174, 175, 176 comprennent chacun une incision 181, 182, 183, 184, 185, 186. Pour une description plus détaillée de l'arrangement des blocs 171, 172, 173, 174, 175, 176 et des incisions 181, 182, 183, 184, 185, 186, on se référera à la description ci-dessus du premier motif. La densité d'incision SD2 dans l'ensemble de blocs de pas P2 comprenant le premier bloc 171, le second bloc 172, le troisième bloc 173, le quatrième bloc 174, le cinquième bloc 175 et le sixième bloc 176 correspond au rapport entre la longueur projetée lpy12, lpy22, lpy32, lpy42, lpy52, lpy62 de la première incision 181, de la seconde incision 182, de la troisième incision 183, de la quatrième incision 184, de la cinquième incision 185, de la sixième incision 186 selon une direction axiale Y sur le produit du pas P2 du motif et de la largeur W de la bande de roulement, l'ensemble étant multiplié par

1000, tel que $$SD2 = \frac{(lpy12+lpy22+lpy32+lpy42+lpy52+lpy62)}{P2*W} * 1000$$ .

La figure 18 illustre un troisième motif présentant un troisième pas P3. Comme pour le premier motif et le second motif, ce troisième motif comprend un premier bloc 171, un second bloc 172, un troisième bloc 173, un quatrième bloc 174, un cinquième bloc 175 et un sixième bloc 176. Les différents blocs 171, 172, 173, 174, 175, 176 comprennent chacun une incision 181, 182, 183, 184, 185, 186. Pour une description plus détaillée de l'arrangement des blocs 171, 172, 173, 174, 175, 176 et des incisions 181, 182, 183, 184, 185, 186, on se référera à la description ci-dessus du premier motif ou du second motif. La densité d'incision SD3 dans l'ensemble de blocs de pas P3 comprenant le premier bloc 171, le second bloc 172, le troisième bloc 173, le quatrième bloc 174, le cinquième bloc 175 et le sixième bloc 176 correspond au rapport entre la longueur projetée lpy13, lpy23, lpy33, lpy43, lpy53, lpy63 de la première incision 181, de la seconde incision 182, de la troisième incision 183, de la quatrième incision 184, de la cinquième incision 185, de la sixième incision 186 selon une direction axiale Y sur le produit du pas P3 du motif et de la largeur W de la bande de roulement, l'ensemble étant multiplié par 1000, tel que

$$SD2 = \frac{(lpy13+lpy23+lpy33+lpy43+lpy53+lpy63)}{P3*W} * 1000$$

. La bande de roulement comprend un arrangement de N1 motifs de pas P1, de N2 motifs de pas P2 et de N3 motifs de pas P3. Il est ainsi possible de déterminer une densité moyenne d'incision SDmoy correspondant à la moyenne des densités d'incisions SD1, SD2, SD3 des motifs de pas P1, P2, P3 sur toute la circonférence de la bande de roulement. La densité moyenne d'incisions SDmoy est ainsi pondérée en fonction du nombre de motifs N1, N2, N3 par type de motif et du pas P1, P2, p3, tel que :

$$SDmoy = \frac{(SD1*N1*P1+SD2*N2*P2+SD3*N3*P3)}{N1*P1+N2*P2+N3*P3}$$

.

Les motifs de pas P1, P2, P3 sont arrangés de manière aléatoire sur la bande de roulement afin de limiter l'émergence d'un bruit du pneumatique en roulage. Ainsi pour un pneumatique de dimension 205/55 R 16, l'arrangement entre motifs de pas P1, P2 et P3 pourrait être le suivant : P1 P1 P2 P1 P2 P2 P2 P2 P1 P1 P2 P1 P1 P1 P2 P2 P3 P2 P2 P3 P2 P1 P2 P2 P1 P1 P1 P1 P2 P1 P2 P1 P1 P1 P1 P2 P1 P1 P2 P2 P3 P3 P3 P2 P2 P3 P3 P3 P3 P2 P2 P1 P2 P2 P3 P2 P1 P2 P2 P1 P2 P3 P2 P2 P1 P2 P2 P2 P1 P1 P1 P2 P3 P2 P1. Un tel arrangement comporterait alors 21 motifs de pas P1, 35 motifs de pas P2 et 13 motifs de pas P3. Comme il a déjà été précisé, un pas P est déterminé comme la distance entre les centres de deux rainures obliques adjacentes encadrant un bloc. Afin de déterminer avec précision les valeurs des pas P1, P2 et P3, ceux-ci sont mesurés dans des groupes de motifs appartenant à un même type de motif par exemple dans des groupes de motifs P1 P1 P1, P2 P2 P2 et P3 P3 P3.

Pour l'ensemble des modes de réalisation illustrés aux figures 1 à 18, chaque bloc est formé à partir d'un matériau caoutchoutique. Dans un mode de réalisation préférentiel, la composition de ce matériau caoutchoutique présente une température de transition vitreuse comprise entre -40°C et -10°C, et préférentiellement entre -35°C et -15°C et un module de cisaillement mesuré à 60°C compris entre 0,5 MPa et 2 MPa, et préférentiellement entre 0,7 MPa et 1,5 MPa.

Dans un mode de réalisation préférentiel, la composition du matériau caoutchoutique des blocs est à base d'au moins :

- une matrice élastomère comprenant plus de 50% en masse d'un SBR solution qui porte une fonction silanol et une fonction amine ;
- 20 à 200 pce d'au moins une silice ;
- un agent de couplage pour coupler la silice au SBR solution ;
- 10 à 100 pce d'une résine hydrocarbonée présentant une Tg supérieure à 20°C ;
- 15 à 50 pce d'un plastifiant liquide.

Le SBR solution de ce mode de réalisation préférentiel est un copolymère de styrène et de butadiène préparé en solution. Il a pour caractéristique de porter une fonction silanol et une fonction amine. La fonction silanol du SBR solution portant une fonction silanol et une fonction amine peut par exemple être introduite par hydrosilylation de la chaîne élastomère par un silane portant un groupement alcoxysilane, suivie d'une hydrolyse de la fonction alcoxysilane en fonction silanol. La fonction silanol du SBR solution portant une fonction silanol et une fonction amine peut également être introduite par réaction des chaînes élastomères vivantes avec un composé polysiloxane cyclique tel que décrit dans EP 0 778 311. La fonction amine du SBR solution portant une fonction silanol et une fonction amine peut par exemple être introduite par un amorçage de la polymérisation avec un initiateur portant une telle fonction. Un SBR solution portant une fonction silanol et une fonction amine peut également être préparé par réaction des chaînes élastomères vivantes avec un composé portant une fonction alcoxysilane et une fonction amine selon le mode opératoire décrit dans la demande de brevet EP 2 285 852, suivie d'une hydrolyse de la fonction alcoxysilane en fonction silanol. Selon ce mode de préparation, la fonction silanol et la fonction amine sont préférentiellement situées à l'intérieur de la chaîne du SBR solution, en dehors des extrémités de chaîne. La réaction d'hydrolyse de la fonction alcoxysilane portée par le SBR solution en fonction silanol peut être conduite selon le mode opératoire décrit dans la demande de brevet EP 2 266 819 A1 ou bien par une étape de stripping de la solution contenant le SBR solution. La fonction amine peut être une amine primaire, secondaire ou tertiaire, de préférence tertiaire. On notera également que les blocs ont une hauteur radiale maximale Hmax à l'état neuf relativement faible. Cette hauteur radiale est comprise entre 5,5 mm et 9 mm et de préférence entre 6 mm et 7,5 mm. Cette hauteur radiale relativement faible pourrait pénaliser l'adhérence sur un sol mouillé. Ainsi grâce à l'invention, la hauteur radiale est compensée par le fort élancement de la bande de roulement et par les caractéristiques du matériau utilisé contenant le SBR solution. Ceci permet d'assurer dans le temps une bonne adhérence du pneumatique sur un sol mouillé.

L'invention n'est pas limitée aux modes de réalisation et variantes présentées et d'autres modes de réalisation et variantes apparaîtront clairement à l'homme du métier sans sortir du cadre défini par les revendications ci-jointes.

Ainsi, aux figures 9 à 16 il a été représenté à proximité du premier bord 14A et du second bord 14B, des incisions borgnes qui ne s'étendent pas sur toute la longueur d'un bloc et qui ne rejoignent donc pas une découpure pour toutes les extrémités des découpures. En variante, toutes les incisions des blocs du motif débouchent dans une découpure. Dans une autre variante de réalisation, toutes les incisions des blocs du motif sont borgnes.

Ainsi, la figure 18 présente un nombre de découpures obliques 231, 232, 233, 234 égal à quatre. En variante, le nombre de découpures obliques sur la bande de roulement est supérieur à quatre.

Ainsi, les découpures obliques 231, 232, 233, 234 présentent une profondeur identique à celle des rainures obliques 16A, 16B. En variante, les découpures obliques ont une profondeur inférieure à celle des rainures obliques 16A, 16B.

Ainsi sur les figures 1 à 18, les motifs présentent un arrangement du ou des blocs globalement simple. En variante, les motifs peuvent présenter des arrangements plus complexes. Par exemple, chaque motif peut comprendre plusieurs blocs adjacents qui se succèdent selon la direction circonférentielle. Ces blocs adjacents sont délimités par des rainures obliques secondaires. Ces rainures obliques secondaires peuvent présenter un élancement identique aux rainures obliques principales 16A, 16B. En variantes, l'élancement des rainures obliques secondaires est différent de celle des rainures obliques principales 16A, 16B.

## Revendications

1. Pneumatique comportant une bande de roulement (10) directionnelle, ladite bande de roulement comprenant un axe central (12) et deux bords (14A, 14B) encadrant ledit axe central (12) et déterminant une largeur de bande de roulement W, ladite largeur de bande de roulement W étant supérieure ou égale à 140 mm, ladite bande de roulement (10) comprenant une pluralité de motifs (13) qui se succèdent selon la direction circonférentielle, chaque motif ayant un pas P, les motifs (13) délimitant une pluralité de rainures obliques (16A, 16B), chaque rainure oblique s'étendant d'un des bords (14A, 14B) de la bande de roulement jusqu'à l'axe central (12),

   - dans une partie centrale de la bande de roulement centrée sur l'axe central (12) et de largeur correspondant à 80% de la largeur W de ladite bande de roulement, tout ou partie des rainures obliques (16A, 16B) de la pluralité de rainures obliques ayant w un élancement E compris entre 0,85 et 1,5 et de préférence entre 0,87 et 1,1, ledit élancement correspondant au rapport entre une longueur projetée Lpx de la rainure oblique selon la direction circonférentielle (X) avec la moitié de la largeur de la partie centrale de la bande de roulement (10),

   tel que $\mathrm{E} = \dfrac{Lpx}{0,4*\mathrm{W}}$ , ledit pneumatique étant **caractérisé en ce que**:

   - tout ou partie des motifs comprend au moins une incision (18 ; 181, 182, 183, 184, 185, 186), une densité d'incision SD dans tout ou partie de ces motifs étant comprise entre 10 mm$^{-1}$ et 70 mm$^{-1}$, ladite densité d'incision SD correspondant au rapport entre la somme de la/des longueur(s) projetée(s) lpyi de la/des incision(s) selon une direction axiale (Y) sur le produit du pas P du motif et de la largeur W de la bande de roulement, l'ensemble étant multiplié par 1000, tel que SD = $\dfrac{\sum_{i=1}^{n} lpyi}{\mathrm{P}*\mathrm{W}} * 1000$ , avec n le nombre d'incisions dans le motif.

2. Pneumatique selon la revendication 1, dans lequel la bande de roulement comprend différent types de motifs Mj, avec j supérieur ou égal à 2, les motifs appartenant à un même type de motif ayant un même pas, le pas entre des motifs appartenant à deux types de motifs différents étant différent, et en ce que la densité moyenne d'incisions SDmoy est comprise entre 10 mm$^{-1}$ et 70 mm$^{-1}$, ladite densité moyenne d'incisions SDmoy correspondant à la moyenne des densités d'incisions SDj des motifs des différents types de motifs Mj sur toute la circonférence de la bande de roulement, ladite densité moyenne d'incisions SDmoy étant pondérée en fonction du nombre de motifs Nj par type de motif Mj et du pas Pj des motifs appartenant au type de motif Mj sur ladite circonférence de la bande de roulement, tel que

   $$\mathrm{SDmoy} = \frac{\sum_{j=1}^{m} (SDj*Nj*Pj)}{\sum_{j=1}^{m} (Nj*Pj)}$$

   avec SDj la densité d'incisions dans un motif appartenant au type de motif Mj, Pj le pas des motifs appartenant au type de motif Mj, Nj le nombre de motifs appartenant au type de motif Mj.

3. Pneumatique selon la revendication 1 ou la revendication 2, dans lequel la densité d'incision SD ou la densité moyenne d'incision SDmoy est supérieure à 25 mm$^{-1}$ et/ou inférieure à 50 mm$^{-1}$.

4. Pneumatique selon l'une quelconque des revendications 1 à 3, dans lequel la densité d'incision SD ou la densité moyenne d'incision SDmoy est comprise entre 30 mm$^{-1}$ et 40 mm$^{-1}$.

5. Pneumatique selon l'une quelconque des revendications 1 à 4, chaque motif (13) comprenant un ensemble de bloc comportant au moins un bloc (17 ; 171, 172, 173, 174, 175, 176), dans lequel ledit bloc a une hauteur radiale maximale Hmax à l'état neuf comprise entre 5,5 mm et 9 mm et de préférence entre 6 mm et 7,5 mm.

6. Pneumatique selon la revendication 5, chaque motif comprenant au moins deux blocs adjacents (171, 173 ; 173, 175; 175, 172 ; 172, 174 ; 174, 176), le nombre d'incision dans chaque bloc étant supérieur ou égal à une incision, dans lequel le nombre d'incision et/ou l'arrangement desdites incisions est différent entre les deux blocs adjacents.

7. Pneumatique selon l'une des revendications 5 ou 6, le ou les blocs (17 ; 171, 172, 173, 174, 175, 176) étant en matériau caoutchoutique, dans lequel la composition dudit matériau caoutchoutique a une température de transition vitreuse Tg comprise entre -40°C et -10°C et préférentiellement entre -35°C et -15°C et un module complexe de cisaillement dynamique G* mesuré à 60°C compris entre 0,5 MPa et 2 MPa, et préférentiellement entre 0,7 MPa et 1,5 MPa.

8. Pneumatique selon l'une quelconque des revendications 5 à 7, dans lequel la composition du bloc comprend un mélange élastomérique, ledit mélange élastomérique comportant un élastomère diénique modifié comprenant au moins un groupe fonctionnel comprenant un atome de silicium, ce dernier se situant au sein de la chaîne principale de l'élastomère y compris les extrémités de chaîne.

9. Pneumatique selon la revendication 8, dans lequel l'élastomère diénique modifié comprenant un groupe fonctionnel comprenant un atome de silicium est un élastomère modifié comprenant au moins une fonction silanol située en une extrémité de la chaîne principale de l'élastomère.

10. Pneumatique selon la revendication 8, dans lequel l'élastomère diénique modifié comprenant un groupe fonctionnel comprenant un atome de silicium est un élastomère modifié comprenant au sein de sa structure au moins un groupe alcoxysilane lié à l'élastomère par l'atome de silicium, et au moins une fonction comprenant un atome d'azote.

11. Pneumatique selon la revendication 10, dans lequel l'élastomère diénique modifié est majoritairement fonctionnalisé en milieu de chaîne par un groupe alcoxysilane lié aux deux branches de l'élastomère diénique modifié par l'intermédiaire de l'atome de silicium.

12. Pneumatique selon l'une quelconque des revendications 10 ou 11, dans lequel l'élastomère diénique modifié présente au moins deux, de préférence l'ensemble des caractéristiques suivantes :

    - la fonction comprenant un atome d'azote est une amine tertiaire, plus particulièrement un groupement diéthylamino- ou diméthylamino-,
    - la fonction comprenant un atome d'azote est portée par le groupe alcoxysilane par l'intermédiaire d'un groupement espaceur défini comme un radical hydrocarboné aliphatique en C1-C10, plus préférentiellement encore le radical hydrocarboné linéaire en C2 ou C3,
    - le groupe alcoxysilane est un méthoxysilane ou un éthoxysilane, éventuellement partiellement ou totalement hydrolysé en silanol.

13. Pneumatique selon l'une quelconque des revendications 8 à 12, dans lequel l'élastomère diénique modifié est un copolymère butadiène-styrène.

14. Pneumatique selon l'une quelconque des revendications 8 à 13, dans lequel l'élastomère diénique modifié présente une température de transition vitreuse comprise dans un domaine allant de -105°C à -70°C.

15. Pneumatique selon l'une quelconque des revendications 1 à 14, dans lequel ledit pneumatique a une certification hiver 3PMSF, ladite certification étant indiquée sur un flanc du pneumatique.

**Patentansprüche**

1. Reifen mit einem gerichteten Laufstreifen (10), wobei der Laufstreifen eine Mittelachse (12) und zwei Ränder (14A, 14B) umfasst, die die Mittelachse (12) einrahmen und eine Laufstreifenbreite W bestimmen, wobei die Laufstreifenbreite W 140 mm oder mehr beträgt, wobei der Laufstreifen (10) mehrere Muster (13) umfasst, die in Umfangsrichtung aufeinanderfolgen, wobei jedes Muster eine Teilung P aufweist, wobei die Muster (13) mehrere schräge Rillen (16A, 16B) begrenzen, wobei sich jede schräge Rille von einem der Ränder (14A, 14B) des Laufstreifens bis zur Mittelachse (12) erstreckt,

   - wobei in einem Mittelteil des Laufstreifens, der auf der Mittelachse (12) zentriert ist und eine Breite aufweist, die 80 % der Breite W des Laufstreifens entspricht, alle oder ein Teil der schrägen Rillen (16A, 16B) der mehreren schrägen Rillen einen Schlankheitsgrad E zwischen 0,85 und 1,5 und vorzugsweise zwischen 0,87 und 1,1 aufweisen, wobei der Schlankheitsgrad einem Verhältnis zwischen einer projizierten Länge Lpx der schrägen Rille in der Umfangsrichtung (X) und der Hälfte der Breite des Mittelteils des Laufstreifens (10) entspricht, sodass

   $$E = \frac{Lpx}{0,4*W}$$ , wobei der Reifen **dadurch gekennzeichnet ist, dass**:
   - alle oder ein Teil der Muster mindestens einen Einschnitt (18; 181, 182, 183, 184, 185, 186) umfassen, wobei eine Einschnittsdichte SD in allen oder einem Teil der Muster zwischen 10 mm$^{-1}$ und 70 mm$^{-1}$ beträgt, wobei die Einschnittsdichte SD dem Verhältnis zwischen der Summe der projizierten Länge(n) lpyi des Einschnitts (der Einschnitte) in einer axialen Richtung (Y) und dem Produkt aus der Teilung P des Musters und der Breite W des Laufstreifens entspricht, wobei das Ganze mit 1.000 multipliziert wird, sodass

   $$SD = \frac{\sum_{i=1}^{n} lpyi}{P*W} * 1000$$ , wobei n die Anzahl der Einschnitte im Muster ist.

2. Reifen nach Anspruch 1, wobei der Laufstreifen verschiedene Musterarten Mj umfasst, wobei j größer oder gleich 2 ist, wobei die Muster, die zu einer gleichen Musterart gehören, eine gleiche Teilung aufweisen, wobei die Teilung zwischen Mustern, die zu zwei verschiedenen Musterarten gehören, unterschiedlich ist, und wobei die mittlere Einschnittsdichte SDmoy zwischen 10 mm$^{-1}$ und 70 mm$^{-1}$ beträgt, wobei die mittlere Einschnittsdichte SDmoy dem Mittelwert der Einschnittsdichten SDj der Muster der verschiedenen Musterarten Mj über den gesamten Umfang des Laufstreifens entspricht, wobei die mittlere Einschnittsdichte SDmoy in Abhängigkeit von der Musteranzahl Nj pro Musterart Mj und von der Teilung Pj der zu einer Musterart Mj gehörenden Muster über den Umfang des

   $$SDmoy = \frac{\sum_{j=1}^{m}(SDj*Nj*Pj)}{\sum_{j=1}^{m}(Nj*Pj)}$$

   Laufstreifens gewichtet ist, sodass , wobei SDj die Einschnittsdichte in einem zur Musterart Mj gehörenden Muster ist, Pj die Teilung der zur Musterart Mj gehörenden Muster ist und Nj die Anzahl der zur Musterart Mj gehörenden Muster ist.

3. Reifen nach Anspruch 1 oder Anspruch 2, wobei die Einschnittsdichte SD oder die mittlere Einschnittsdichte SDmoy größer als 25 mm$^{-1}$ und/oder kleiner als 50 mm$^{-1}$ ist.

4. Reifen nach einem der Ansprüche 1 bis 3, wobei die Einschnittsdichte SD oder die mittlere Einschnittsdichte SDmoy zwischen 30 mm$^{-1}$ und 40 mm$^{-1}$ beträgt.

5. Reifen nach einem der Ansprüche 1 bis 4, wobei jedes Muster (13) eine Blockanordnung umfasst, die mindestens einen Block (17; 171, 172, 173, 174, 175, 176) aufweist, wobei der Block eine maximale radiale Höhe Hmax im Neuzustand zwischen 5,5 mm und 9 mm und vorzugsweise zwischen 6 mm und 7,5 mm aufweist.

6. Reifen nach Anspruch 5, wobei jedes Muster mindestens zwei benachbarte Blöcke (171, 173; 173, 175; 175, 172; 172, 174; 174, 176) umfasst, wobei die Anzahl der Einschnitte in jedem Block einen Einschnitt oder mehr beträgt, wobei die Anzahl der Einschnitte und/oder die Anordnung der Einschnitte zwischen den beiden benachbarten Blöcken unterschiedlich ist.

7. Reifen nach einem der Ansprüche 5 oder 6, wobei der oder die Blöcke (17; 171, 172, 173, 174, 175, 176) aus einem kautschukartigen Material gebildet sind, wobei die Zusammensetzung des kautschukartigen Materials eine Glasübergangstemperatur Tg zwischen -40°C und -10°C und vorzugsweise zwischen -35°C und -15°C und einen komplexen dynamischen Schubmodul G*, gemessen bei 60°C, zwischen 0,5 MPa und 2 MPa, und vorzugsweise zwischen 0,7 MPa und 1,5 MPa aufweist.

8. Reifen nach einem der Ansprüche 5 bis 7, wobei die Zusammensetzung des Blocks eine elastomere Mischung umfasst, wobei die elastomere Mischung ein modifiziertes Dienelastomer umfasst, das mindestens eine funktionelle Gruppe mit einem Siliciumatom umfasst, wobei sich letzteres innerhalb der Hauptkette des Elastomers einschließlich der Kettenenden befindet.

9. Reifen nach Anspruch 8, wobei das modifizierte Dienelastomer, das eine funktionelle Gruppe mit einem Siliciumatom umfasst, ein modifiziertes Elastomer ist, das mindestens eine Silanolfunktion umfasst, die sich an einem Ende der Hauptkette des Elastomers befindet.

10. Reifen nach Anspruch 8, wobei das modifizierte Dienelastomer, das eine funktionelle Gruppe mit einem Siliciumatom umfasst, ein modifiziertes Elastomer ist, das innerhalb seiner Struktur mindestens eine Alkoxysilangruppe, die über das Siliciumatom an das Elastomer gebunden ist, und mindestens eine Funktion mit einem Stickstoffatom umfasst.

11. Reifen nach Anspruch 10, wobei das modifizierte Dienelastomer überwiegend in der Kettenmitte durch eine Alkoxysilangruppe funktionalisiert ist, die über das Siliciumatom an die beiden Zweige des modifizierten Dienelastomers gebunden ist.

12. Reifen nach einem der Ansprüche 10 oder 11, wobei das modifizierte Dienelastomer mindestens zwei, vorzugsweise alle der folgenden Merkmale aufweist:

- die Funktion mit einem Stickstoffatom ist ein tertiäres Amin, insbesondere eine Diethylamino- oder Dimethylaminogruppe,
- die Funktion mit einem Stickstoffatom wird durch die Alkoxysilangruppe über eine Spacergruppe getragen, die als aliphatischer C1-C10-Kohlenwasserstoffrest definiert ist, besonders vorzugsweise der lineare C2- oder C3-Kohlenwasserstoffrest,
- die Alkoxysilangruppe ist ein Methoxysilan oder ein Ethoxysilan, das gegebenenfalls teilweise oder vollständig zu Silanol hydrolysiert ist.

13. Reifen nach einem der Ansprüche 8 bis 12, wobei das modifizierte Dienelastomer ein Styrol-Butadien-Copolymer ist.

14. Reifen nach einem der Ansprüche 8 bis 13, wobei das modifizierte Dienelastomer eine Glasübergangstemperatur in einem Bereich von -105°C bis -70°C aufweist.

15. Reifen nach einem der Ansprüche 1 bis 14, wobei der Reifen eine 3PMSF-Winterzertifizierung aufweist, wobei die Zertifizierung auf einer Flanke des Reifens angegeben ist.

**Claims**

1. - Tyre comprising a directional tread (10), said tread comprising a central axis (12) and two edges (14A, 14B) flanking said central axis (12) and determining a tread width W, said tread width W being greater than or equal to 140 mm, said tread (10) comprising a plurality of patterns (13) which succeed one another in the circumferential direction, each pattern having a pitch P, the patterns (13) delimiting a plurality of oblique grooves (16A, 16B), each oblique groove extending from one of the edges (14A, 14B) of the tread as far as the central axis (12), in a central part of the tread centred on the central axis (12) and of a width corresponding to 80% of the width W of said tread, all or some of the oblique grooves (16A, 16B) of the plurality of oblique groove having a slenderness ratio E comprised between 0.85 and 1.5 and preferably between 0.87 and 1.1, said slenderness ratio corresponding to the ratio between a projected length Lpx of the oblique groove in the circumferential direction (X) and half the width of the central part of the tread (10), such that $E = \frac{Lpx}{0.4 * W}$ ; said tyre being **characterized in that,** all or some of the patterns comprise at least one sipe (18; 181, 182, 183, 184, 185, 186), a sipes density SD in all or some of these patterns being comprised between 10 mm$^{-1}$ and 70 mm$^{-1}$, said sipes density SD corresponding to the ratio between the sum of the projected length(s) lpyi of the sipe(s) in an axial direction (Y) to the product of the pitch P of the pattern and of the width W of the tread, all then multiplied by 1000, such that $SD = \frac{\sum_{i=1}^{n} lpyi}{P*W} * 1000$, where n is the number of sipes in the pattern.

2. - Tyre according to Claim 1, **wherein** the tread comprises different pattern types Mj, where j is greater than or equal to 2, the patterns belonging to the one same pattern type having the one same pitch, the pitch between patterns belonging to two different pattern types being different, and in that the mean sipes density SDmean is comprised between 10 mm$^{-1}$ and 70 mm$^{-1}$, said mean sipes density SDmean corresponding to the mean of the sipes densities SDj of the patterns of the different pattern types Mj over the entire circumference of the tread, said mean sipes density SDmean being weighted according to the number of patterns Nj per pattern type Mj and according to the pitch Pj of the patterns belonging to that pattern type Mj over said circumference of the tread, such that

$$SDmean = \frac{\sum_{j=1}^{m}(SDj*Nj*Pj)}{\sum_{j=1}^{m}(Nj*Pj)}$$ where SDj is the sipes density in a pattern belonging to the pattern type Mj, Pj is the pitch of the patterns belonging to the pattern type Mj, and Nj is the number of patterns belonging to the pattern type Mj.

3. - Tyre according to Claim 1 or Claim 2, **wherein** the sipes density SD or the mean sipes density SDmean is greater than 25 mm$^{-1}$ and/or less than 50 mm$^{-1}$.

4. - Tyre according to any one of Claims 1 to 3, **wherein** the sipes density SD or the mean sipes density SDmean is comprised between 30 mm$^{-1}$ and 40 mm$^{-1}$.

5. - Tyre according to any one of Claims 1 to 4, each pattern (13) comprising a set of blocks comprising at least one block (17; 171, 172, 173, 174, 175, 176), **wherein** said block has a maximum radial height Hmax when new that is comprised between 5.5 mm and 9 mm and preferably between 6 mm and 7.5 mm.

6. - Tyre according to Claim 5, each pattern comprising at least two adjacent blocks (171, 173; 173, 175; 175, 172; 172, 174; 174, 176), the number of sipes in each block in greater than or equal to one sipe, wherein the number of sipes and/or the arrangement of said sipes differs between two adjacent blocks.

7. - Tyre according to one of Claims 5 or 6, the block or blocks (17; 171, 172, 173, 174, 175, 176) being made of a rubbery material, **wherein** the composition of said rubbery material has a glass transition temperature Tg comprised between -40°C and -10°C and preferably between -35°C and -15°C and a dynamic complex shear modulus G* measured at 60°C comprised between 0.5 MPa and 2 MPa, and preferably between 0.7 MPa and 1.5 MPa.

8. - Tyre according to any one of Claims 5 to 7, **wherein** the composition of the block comprises an elastomer compound, said elastomer compound containing a modified diene elastomer containing at least one functional group comprising a silicon atom, the latter being situated within the main chain of the elastomer, including the ends of the chain.

9. - Tyre according to Claim 8, **wherein** the modified diene elastomer containing a functional group comprising a silicon atom is a modified elastomer containing at least one silanol functional group situated at one end of the main chain of the elastomer.

10. - Tyre according to Claim 8, **wherein** the modified diene elastomer containing a functional group comprising a silicon atom is a modified elastomer containing, within its structure, at least one alkoxysilane group bonded to the elastomer via the silicon atom, and at least one functional group comprising a nitrogen atom.

11. - Tyre according to Claim 10, **wherein** the modified diene elastomer is predominantly functionalized in the middle of the chain by an alkoxysilane group bonded to the two branches of the modified diene elastomer via the silicon atom.

12. - Tyre according to either one of Claims 10 or 11, **wherein** the modified diene elastomer exhibits at least two, and preferably all, of the following characteristics: the functional group comprising a nitrogen atom is a tertiary amine, more particularly a diethylamino- or dimethylamino- group; the functional group comprising a nitrogen atom is borne by the alkoxysilane group via a spacer group defined as an aliphatic C1-C10 hydrocarbon-based radical, more preferentially still the linear C2 or C3 hydrocarbon-based radical; the alkoxysilane group is a methoxysilane or an ethoxysilane, optionally partially or completely hydrolysed to give silanol.

13. - Tyre according to any one of Claims 8 to 12, **wherein** the modified diene elastomer is a butadiene/styrene copolymer.

14. - Tyre according to any one of Claims 8 to 13, **wherein** the modified diene elastomer exhibits a glass transition temperature comprised within a range extending from -105°C to -70°C.

15. - Tyre according to any one of Claims 1 to 14, **wherein** said tyre has a 3PMSF winter certification, said certification being indicated on a sidewall of the tyre.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2240522 A
- DE 102017203225 A1
- EP 0778311 A1
- WO 2011042507 A1
- WO 2009133068 A1
- WO 2015018743 A1
- WO 2015018774 A1
- WO 2015018772 A1
- EP 2285852 A
- EP 2266819 A1
- EP 0778311 A